# EUROPÄISCHE PATENTSCHRIFT

(11) **EP 3 777 282 B1**
(45) Veröffentlichungstag und Bekanntmachung des Hinweises auf die Patenterteilung: **13.07.2022**
(21) Anmeldenummer: 20722621.8
(22) Anmeldetag: 07.05.2020
(51) Int. Cl.: H04W 12/122, B60R 25/00, G07C 9/00, B60R 25/24, H04W 12/126, H04W 12/79

(54) **ERKENNUNG VON ANGRIFFEN AUF FUNKAUTORISIERUNGSSYSTEME**
DETECTION OF ATTACKS ON WIRELESS AUTHORISATION SYSTEMS
DÉTECTION D'ATTAQUES SUR DES SYSTÈMES D'AUTORISATION RADIO

(30) Priorität: 13.05.2019 EP 19174045
(43) Veröffentlichungstag der Anmeldung: 17.02.2021
(73) Patentinhaber: Lambda: 4 Entwicklungen GmbH, 22299 Hamburg (DE)
(72) Erfinder: REIMANN, Rönne, 22769 Hamburg (DE)
(74) Vertreter: Raffay & Fleck
(86) Internationale Anmeldenummer: PCT/EP2020/062696
(87) Internationale Veröffentlichungsnummer: WO 2020/229294

(56) Entgegenhaltungen:
- DE-A1- 10 027 380
- DE-A1-102017 001 092
- US-A1- 2004 137 877
- US-A1- 2016 323 246
- US-A1- 2018 254 910

## Beschreibung

Die Erfindung betrifft ein neues Konzept für sichere Funkautorisierungssysteme hinsichtlich einer Feststellung eines Angriffs auf das Funkautorisierungssystems, insbesondere für Zugangsbeschränkungssysteme, beispielsweise zur Sicherung von Funkschlüsseln, beispielsweise für Automobile.

Funkautorisierungssysteme und/oder Zugangsbeschränkungssysteme finden in der heutigen Zeit auf vielerlei Gebieten Anwendung. Beispielsweise ist heutzutage nahezu jedes Automobil mit einem kontaktlosen Zugangsbeschränkungssystem ausgestattet mit dessen Hilfe der Besitzer des Automobils dieses per Funkautorisierung öffnen und verschließen kann. Ferner werden Funkautorisierungssysteme beispielsweise auch im Bereich der drahtlosen Netzwerktechnologie und angrenzenden Bereichen im hohen Umfang genutzt. Mittels solcher Funkautorisierungs- und/oder Zugangsbeschränkungssysteme soll in der Regel der unbefugte Zugang Dritter unterbunden werden. Nicht selten sollen hierdurch nicht unerhebliche finanzielle Gegenwerte, wie beispielsweise ein Automobil, oder, insbesondere sensible, Daten, z.B. in Drahtlosnetzwerken, oder Ähnliches vor dem unbefugten Zugang Dritter geschützt werden.

Funkautorisierungssysteme, Zugangsbeschränkungsvorrichtungen und/oder Zugangsbeschränkungssysteme können beispielsweise eingerichtet sein, eine Freigabe, beispielsweise eines Zugangs insbesondere durch ein Zugangskontrollmittel und/oder mittels eines Zugangskontrollmittels, zu steuern, kontrollieren und/oder gewähren. Zugang umfasst dabei insbesondere einen Zutritt, ein Aktivieren, ein Deaktivieren und/oder ein Öffnen, Insbesondere wird in der Regel der Zugang, der Zutritt, das Aktivieren, Deaktivieren und/oder das Öffnen nur gewährt, wenn nach Durchführung eines Autorisierungsversuchs, gegebenenfalls nach mehrmaliger Wiederholung eines Autorisierungsversuchs, eine Autorisierung erfolgreich durchgeführt wurde und insbesondere keine oder nur maximal einer vorbestimmte Anzahl von fehlerhaften Autorisierungsversuchen vorliegt.

In der Regel wird der Zugang, der Zutritt, das Aktivieren, Deaktivieren und/oder das Öffnen nur freigegeben (gewährt), wenn eine vordefinierte Authentifizierungsanforderung erfüllt ist, beispielsweise ein korrektes Passwort eingegeben wird oder wenn beispielsweise ein Zertifikat gültig und/oder im Zugangssystem als zulässig gekennzeichnet ist und/oder ein Schlüssel in ein Schloss schließt. Aber auch andere Authentifizierungsanforderungen wie die korrekte Antwort auf eine Frage oder einen Code können genutzt werden. So kann von einer Zugangsbeschränkungsvorrichtung ein Code ausgesendet werden, der mittels eines Autorisierungsmittels verarbeitet wird und kann das Ergebnis an die Zugangsbeschränkungsvorrichtung übermittelt und dort geprüft, insbesondere mit einer vorbestimmten Angabe vergleichen, werden und die Freigabe vom Ausgang der Prüfung abhängig gemacht sein.

Eine Authentifizierungsanforderung kann eine Vielzahl von Authentifizierungsteilanforderungen beinhalten, wie beispielsweise bei Multi-Faktor-Authentifizierungen.

Als Zugang kann insbesondere neben einem Zutritt zu einem Bereich, im Sinne der möglich Bewegung eines Gegenstandes und/oder einer Person in diesen Bereich, beispielsweise das innere eines Raumes oder eines Fahrzeuges, auch der Zugang zu einer Funktion, insbesondere auch im Sinne von Aktivierung oder Freigabe einer Funktion, verstanden werden, so beispielsweise der Zugang zu der Funktion des Anlassens oder Startens einer Fahrzeuges oder der Zugang zu der Funktion "Kaffee ausgeben" einer Kaffeemaschine. Entsprechend sind Zugangskontrollsysteme insbesondere nicht nur solche, die nur ein Zutritt in einen Bereich, im Sinne der möglich Bewegung eines Gegenstandes und/oder einer Person in diesen Bereich hinein, kontrollieren, beschränken, gewähren und/oder schützen, sondern insbesondere auch solche, die den Zugang zu einer Funktion, insbesondere auch im Sinne von Aktivierung oder Freigabe einer Funktion, kontrollieren, beschränken, gewähren und/oder schützen.

Als Zugangskontrollsystem kommen insbesondere Autorisierungssysteme, beispielsweise zur Anmeldung in Computersystemen, beispielsweise mittels eines Passworts und/oder eines Zertifikats, oder auch klassische Zugangskontrollsysteme wie Schlösser, Schranken, Türen und/oder Schleusen und/oder solche zur Freigabe von Funktionen, beispielsweise einer Servicestation, wie Kaffeeautomat, in Frage. Insbesondere kann es sich dabei um Türen und/oder Zündschlösser und/oder Anlasser eines Fahrzeuges (z.B. Kraftfahrzeug, Flugzeug, Schiff oder autonomes Taxi - sowie aller denkbaren weiteren) handeln. Ebenfalls kann es einen Zugang zu einer beliebigen Servicestation sichern und/oder freigeben (Geldautomat, Telefon, Kaffeeautomat - die Liste ist beliebig erweiterbar). Als Autorisierungsmittel kommen beispielsweise Mobiltelefon, Schlüssel, Zertifikate und/oder Eingabesysteme zur Eingabe von Passwörtern in Frage.

Häufig ist die Gewährung des Zugangs auch oder nur davon abhängig, ob sich das Autorisierungsmittel oder das zweite Objekt in der Nähe des ersten Objektes befindet, wobei der Zugang insbesondere nur bei Unterschreitung eines vorbestimmten Abstandes gewährt wird. Der Abstand kann auch durch eine Empfangsleistung/-stärke definiert sein. Zur Bestimmung der Entfernung sind auch phasenbasierte Entfernungsmessung und Laufzeitanalysen bekannte Mittel. Alle diese Methoden sind durch einen "Man in the Middle" oder "Relay attack" angreifbar. Am sichersten ist die Laufzeitanalyse RTT (round trip time) gegen einen solchen Angriff, daher wird dieser bevorzugt verwendet, wenn die Sicherheit hoch sein soll. Eine Laufzeitanalyse wird in Bandbreiten begrenzten Funksystemen am einfachsten über eine Zeitanalyse der ankommenden Symbole der Nachrichten oder andere Merkmale in dem Funksignal gelöst. Insbesondere eine Laufzeitanalyse wird häufig "early-detect/late-commit" angegriffen. Insbesondere um diesen und ähnliche Angriffe zu erkennen kann die Erfindung eingesetzt werden.

Es sind zahlreiche Angriffsmöglichkeiten auf funkbasierte Autorisierungssystem, Zugangsbeschränkungsvorrichtungen und/oder Zugangsbeschränkungssysteme, insbesondere Relay-Angriffe, durch Dritte auf solche Systeme, insbesondere auf Systeme zur Zugangsbeschränkung in Automobilen und/oder Kraftfahrzeugen oder im Bereich der Zugangsbeschränkung in Funknetzwerken, bekannt, wie beispielsweise der sog. "Range Extender" oder "Man-In-The-Middle"-Angriff. Ein solcher Angriff kann durch eine Laufzeitanalyse (RTT round trip time) des Signals erkannt werden. Diese Laufzeitanalyse kann z.B. durch Messung der Zeiten wann die einzelnen Symbole einer Nachricht genau ankommen vorgenommen werden. Allerdings kann der Angreifer z.B. mit einem "early-detect/late-commit" Angriff diese Zeitmessung versuchen so zu manipulieren, dass der "Man in the middle" nicht auffällt. Ein (Angriffs-)Signal eines solchen Dritten ist hierbei, wie der Erfinder erkannt hat, in der Regel in zeitlich Hinsicht kompakter als ein originäres Signal, weist insbesondere einen steileren Anstieg auf. Hieraus resultiert automatisch eine erhöhte spektrale Breite eines solchen (Angriffs-)Signals gegenüber den originären Signalen des Funkautorisierungssystems.

Bisherige Konzepte für sichere Funkautorisierungssysteme beruhen vor allem darauf, einen Angriff möglichst effizient zu verhindern. Hierzu wird das für einen Zugang nötige Freigabesignal möglichst komplex gestaltet, sodass sich ein Angriff möglichst schwer gestaltet. Verwendung hierbei finden beispielsweise breitbandige Signale bzw. Systeme oder aber Systeme mit zahlreichen verschiedenen Freigabesignale und/oder Abfolgen derer und/oder besonders komplex codierte bzw. zu berechnende Freigabesignale. So ist es beispielsweise aus der DE 10 027 380 A1 bekannt, auf Grund einer Anfrage ein breitbandiges Signal zu erzeugen und am Empfänger zu überprüfen, ob das empfangene Signal der auf der Anfrage beruhenden Erwartung entspricht. Auch aus der US 2004/0 137 877 A1, der WO 2000 005,696 A2 und der WO 2000 012,846 A1 ist ein Dualtonverfahren oder ein Verfahren mit Abfolgen von Dualtönen bekannt, bei dem am Empfänger geprüft wird, ob die Dualtöne oder deren Abfolge mit der erwarteten Reinheit empfangen wird. Dazu verfügt der Empfänger über die Möglichkeit, das empfangene Signal mit einer großen Bandbreite oder mit veränderbaren Filtern zu empfangen, um dies zu analysieren. So soll eine durch ein Relais erzeugte Störung der 3. Ordnung durch Mischen der Dualtöne erkannt werden. Die bekannten Systeme sind dementsprechend aufwendig bzw. technisch anspruchsvoll. Entsprechend teure Systemkomponenten, wie beispielsweise ein Breitbandempfänger, oder eine vergleichsweise leistungsstarke Recheneinheit sind in der Regel von Nöten, wodurch diese Systeme, Verfahren und/oder Komponenten ressourcenintensiv sind. Zudem ist es mit fortschreitender Technik meist recht schnell möglich, zunächst als sicher angesehene Systeme auch in der Praxis zu umgehen, weil beispielsweise mehr Rechenleistung zu geringem Preis auf engem Raum zur Verfügung steht, als dies bei der Konzeptionierung der Systeme gegeben war.

Aus der DE 10 2017 001 092 A1 ist es zudem bekannt, an einem Auto und an einem Schlüssel jeweils Spektren der dort jeweils zu empfangenen Umgebungsspektren aufzunehmen und diese zu vergleichen, um daraus zu schließen, ob sich beide in etwa am selben Ort aufhalten, um Relaisangriffe zu verhindern.

Dementsprechend ist Aufgabe der Erfindung ein Konzept für sichere Funkautorisierungssysteme und/oder Zugangsbeschränkungssysteme aufzuzeigen, welches auch in simpleren Systemen verwendet werden kann und sich insbesondere mit den zahlreichen bekannten Lösungen, so beispielsweise komplexen Freigabesignalen, kombinieren lässt, und welches insbesondere konzeptionell nicht von der Annahme beschränkter Rechenleistung abhängig ist.

Gelöst wird diese Aufgabe durch ein Konzept, in welchem nicht die unmittelbare Verhinderung eines Angriffs im Mittelpunkt steht, sondern die Feststellung, ob es sich bei einem Signal um ein originäres Signal des Funkautorisierungssystems handelt oder nicht, und zwar bezogen auf das Signal und nicht (nur) bezogen auf den im Signal codierten Inhalt. Basierend auf dieser Feststellung kann beispielsweise eine Entscheidung getroffen werden, ob das Signal beachtet und weiter geprüft oder verworfen wird und somit ggf. ein Zugang erteilt oder verwehrt wird.

Das erfindungsgemäße Konzept umfasst eine Verwendung eines Vergleiches eines Maßes der spektralen Verteilung eines empfangen Eingangssignals mit einer vorbestimmten Spanne nach Anspruch 1, sowie ein entsprechendes Verfahren nach Anspruch 2. Die Ansprüche 3 bis 11 beschreiben vorteilhafte Weiterbildungen der erfindungsgemäßen Verwendung oder des erfindungsgemäßen Verfahrens. Ferner wird die Aufgabe durch ein erfindungsgemäßes Funkautorisierungssystem nach Anspruch 12 dessen vorteilhaften Weiterbildungen nach den Ansprüchen 13 bis 15 gelöst.

Zur Lösung der erfindungsgemäßen Aufgabe ist ein Funkautorisierungssystem, aufweisend mindestens ein erstes und ein zweites Objekt, eingerichtet, durch mindestens ein Freigabesignal des zweiten Objekts an das erste Objekt, eine Freigabe herbeizuführen, insbesondere einen Zugang freizugeben und/oder zu gewähren. Hierbei wird mittels des Funkautorisierungssystem eine Vielzahl von Symbolen und/oder Chips mit einer ersten Symbol- oder Chiprate in mindestens einem ersten analogen Datensignal codiert von dem ersten zu dem zweiten Objekt übertragen. Das erste sowie zweite Objekt werden hierbei jeweils durch einen Sender und/oder Empfänger, insbesondere je einen Transceiver, ausgebildet, so zum Beispiel durch einen Sender oder Transceiver in einem (Funk-)Schlüssel eines Automobils sowie einen Empfänger oder Transceiver einer Funkschließeinheit des Automobils in einem Funkzugangssystem bzw. Funkautorisierungssystem. Unter dem Herbeiführen einer Freigabe wird in diesem Zusammenhang beispielsweise das Öffnen, Entriegeln und/oder Starten und/oder das Ermöglichen des Öffnens oder Startens des entsprechenden Automobils nach Aussenden des Freigabesignals an das Automobil durch Betätigung des (Funk-)Schlüssels sowie Empfangens des Freigabesignals an der Funkschließeinheit des Automobils verstanden. Andere Beispiele für Freigaben können beispielsweise das Gewähren eines Zugangs zu einem Funknetzwerk, oder aber das Gewähren eines Zugangs zu einer Funktion, wie beispielsweise der Funktion "Kaffee ausgeben" einer Kaffeemaschine sein. Prinzipiell ist als Freigabe jede Gewährung eines Zugangs zu einem Gegenstand; Ort, Bereich oder Räumlichkeit; und/oder einer Funktion denkbar, welche zum Schutz gegenüber einem nicht-autorisiertem Zugang einer Authentifizierung zur Gewährung des Zugangs bedarf, verstanden werden.

Das Freigabesignal kann aber auch nur einen Teil der notwendigen Freigabemaßnahmen darstellen, so kann ein weiterer Bestandteil der Authentifizierung notwendig sein, um beispielsweise die Autotür zu öffnen, wobei dies bevorzugt aber nicht der Fall ist. Beispielsweise kann dazu auch ein weiteres Signal einer anderen Frequenz oder eines anderen Bandes notwendig sein, wobei dies bevorzugt aber ebenfalls nicht der Fall ist. Auch kann es beispielsweise erforderlich sein, dass erfindungsgemäße Verfahren mehrfach also mit mehreren, aufeinander folgenden und ggf. unterschiedlichen Freigabesignalen durchzuführen, um letztendlich beispielsweise ein Schloss zu öffnen. Erfindungsgemäß handelt es sich vorteilhafterweise in jedem Fall bei dem Freigabesignal, welches einer spektralen Betrachtung unterzogen wird, insbesondere nicht um ein Mehrtonsignal.

Ein Freigabesignal kann ferner auch Teil einer Signalschleife sein, also eines ein oder mehrmaligen Hin- und Zurücksenden eines oder des Signals zwischen erstem und zweitem Objekt. So kann beispielsweise vom ersten Objekt ein erstes Signal beinhaltend eine erst Nachricht an das zweite Objekt gesendet werden und das zweite Objekt mit einem zweiten Signal, insbesondere Freigabesignal, an das erste Objekt reagieren. Dabei ist das zweite Signal, insbesondere die in ihm übermittelte zweite Nachricht, insbesondere abhängig von der ersten Nachricht des ersten Signals. Die erste und/oder zweite Nachricht kann beispielsweise verschlüsselt sein und/oder einen (Symbol-)Code beinhalten. So kann das zweite Objekt zunächst den (ggf. verschlüsselten) (Symbol-)Code der ersten Nachricht entschlüsseln und unter Verwendung des ersten (Symbol-)Codes einen zweiten (Symbol-)Code erzeugen, diesen (ggf. verschlüsselt) im zweiten Signal senden. Bevorzugt wird das Senden des ersten Signals durch ein Initialisierungssignal des zweiten an das erste Objekt ausgelöst. In diesem Fall sollte sowohl das erste als auch das zweite Objekte so eingerichtet sein, dass die Objekte jeweils als Sender und Empfänger dienen können.

Freigabesignale können beispielsweise darüber hinaus codiert und/oder verschlüsselt sein. Insbesondere wird ferner eine entsprechende Codierung und/oder Verschlüsselung eines Eingangssignals in dem Funkautorisierungssystem insofern untersucht, ob diese der Codierung und/oder Verschlüsselung jener eines Freigabesignals entspricht und/oder ob der innerhalb der Codierung und/oder Verschlüsselung eines Freigabesignals zu findende Inhalt beziehungsweise (Symbol)-Code im Eingangssignal ebenfalls zu finden ist.

Ferner können Freigabesignale nicht nur eine entsprechende Codierung und/oder Verschlüsselung und/oder einen entsprechenden Inhalt und/oder (Symbol-)Code aufweisen, sondern weisen darüber hinaus zusätzlich eine spektrale Verteilung und/oder spektrale Breite und/oder Start- und/oder Endfrequenzen bzw. Kennpunkt(e) innerhalb der spektralen Verteilung des Signals auf, die bestimmte Anforderungen erfüllt (die entsprechenden Anforderungen werden im späteren Verlauf der Beschreibung näher erläutert).

Insbesondere ist und/oder wird das mindestens eine Freigabesignal ausschließlich auf Basis von im Funkautorisierungssystem vorbestimmten Daten und/oder auf Basis von Signalen des Funkautorisierungssystem durch das Funkautorisierungssystem bestimmt. Das mindestens eine Freigabesignal ist ferner Teil des mindesten einen ersten analogen Datensignals und in dem Freigabesignal ist Informationen, insbesondere digital, in einer Mehrzahl von Symbolen und/oder Chips codiert. So kann das Freigabesignal nach einer auf dem Schlüssel gespeicherten Anweisung erzeugt werden und/oder auf einem vom Funkautorisierungssystem erzeugten und vom Schlüssel empfangenen Signal basierend erzeugt werden. Insbesondere werden zur Erzeugung des Freigabesignals keine äußeren Informationen genutzt, die nicht auf im Funkautorisierungssystem vorbestimmt gespeicherten Daten beruhen oder auf Basis solcher durch das Verfahren, die Verwendung und/oder das Funkautorisierungssystem erzeugt werden. Insbesondere basiert das Freigabesignal nicht auf dem Funkautorisierungssystem fremden Signalen und/oder nicht auf Umgebungssignalen.

Vorteilhaft ist insbesondere die Möglichkeit das Konzept mit standardisierten Datenübertragungssignalen als Freigabesignalen, insbesondere bekannter System, wie beispielsweise 4G, 5G, Bluetooth und/oder WLAN, verwenden zu können, wobei insbesondere keine Dualtöne und/oder kontinuierliche Wellen (continous waves) und/oder keine eigens für dieses Verfahren vorgesehene Signale verwendet werden. Vielmehr soll anhand der standardisierten Datenübertragungssignale eine Erkennung eines möglichen Angriffs durchgeführt werden.

Insbesondere sind die verwendeten Freigabesignale solche, die, insbesondere zeitgleich, auch zur digitalen Datenübertragung von Daten, insbesondere Nutzdaten, insbesondere in Form von Chips und/oder Symbolen, verwendet werden. Insbesondere werden die Signale eines solchen Übertragungssystems für die Erfindung genutzt, insbesondere die Signale eines Bluetoothsystems. Insbesondere sind die Objekte Transceiver eines digitalen Datenübertragungssystems, insbesondere arbeitend mit QAM. Insbesondere sind die Freigabesignale Signale, die, insbesondere zeitgleich, zur digitalen Datenübertragung genutzt werden, insbesondere mittels der Übertragung von Chips und/oder Symbolen, insbesondere Signale eines digitalen, insbesondere QAM, ASK, FSK, GFSK, PSK, QPSK, QAM, APSK und/oder OFDM basierten, Datenübertragungssystem, insbesondere eines Chip- und/oder Symbolsynchronisierten digitalen Datenübertragungssystems.

Die Verwendung eines Freigabesignals mit darin codierten digitalen Signalen hat den weiteren Vorteil, dass die im Freigabesignal durch die darin codierten Informationen enthaltenden Flanken zusammen mit einem weiteren, insbesondere codierte digitale Informationen tragenden, Signal genutzt werden können, um eine Signalrundlaufzeitmessung zwischen erstem und zweitem Objekt sehr genau zu bestimmen. Dies ermöglicht eine weitere Absicherung des erfindungsgemäßen Verfahrens, der Verwendung und des Systems. Insbesondere ist das Verfahren, die Verwendung und/oder das System zu einer solchen Bestimmung eingerichtet und/oder beinhaltet es/sie diese. So kann eine bestimmte Signalrundlaufzeit ebenfalls für eine Freigabeentscheidung berücksichtigt werden.

Insbesondere ist das Freigabesignal ein Einkanalsignal und insbesondere kein Dualtonsignal und/oder ein Signal
- mit zu jeder Zeit nur orthogonalen Trägerfrequenzen und/oder
- mit zu jeder Zeit nur einer Trägerfrequenz in einem Frequenzband aufweisend eine solche Breite und/oder dessen Breite so gewählt ist/wird, dass bei der Verstärkung des Freigabesignals keine Töne dritter Ordnung entstehen, und/oder
- mit zu jeder Zeit nur einer Trägerfrequenz in einem Frequenzband von mindestens 0,5 MHz, insbesondere mindestens 1 MHz, insbesondere symmetrisch um jeden Ton des Freigabesignals,
wobei das Freigabesignal insbesondere bevorzugt zu jeder Zeit nur eine Trägerfrequenz und/oder ausschließlich orthogonale Trägerfrequenzen aufweist.

Somit existiert vorteilhafterweise in jedem Frequenzband, insbesondere alle dieselbe aus den zuvor spezifizierten Frequenzbandbreiten gewählte Breite aufweisend, wobei die Frequenzbänder insbesondere symmetrisch um jeden Ton oder jede Frequenz des Freigabesignals angeordnet werden/sind, zu jeder Zeit nur ein Ton oder eine Frequenz im Freigabesignal und/oder es existieren vorteilhafterweise in jedem Frequenzband, insbesondere alle aufweisend eine der zuvor spezifizierten Breiten, wobei die Frequenzbänder insbesondere symmetrisch um jeden Ton oder jede Frequenz des Freigabesignals angeordnet werden/sind, zu jeder Zeit nur orthogonale Töne oder Frequenzen im Freigabesignal.

Insbesondere wird keine Zweiton-Messung durchgeführt. Vielmehr beruht das Verfahren darauf, dass ein Angreifer, beispielsweise bei einem "early-detect-latecommit" Angriff, eine zeitliche Komprimierung des Signals und damit eine Erhöhung der Bandbreite durchführen muss, was durch das Verfahren erkannt wird, insbesondere durch Auswahl des Freigabesignals und/oder der Frequenzbänder und/oder deren Breiten, insbesondere wie zuvor beschrieben.

Nicht jedes am ersten Objekt empfangene Eingangssignal muss ein Freigabesignal sein, es kann sich beispielsweise auch um Angriffssignale Dritter handeln. Folglich kann der Ursprung des an dem ersten Objekt empfangenen Eingangssignals das zweite Objekt sein, insbesondere wenn es sich bei dem Eingangssignal um ein Freigabesignal handelt, oder von diesem abweichen, beispielsweise durch einen Angriff auf das Funkautorisierungssystem durch ein drittes, nicht zu dem Funkautorisierungssystem zugehöriges Objekt gegeben sein. Unter einem Angriff kann folglich beispielsweise der Versuch eines solchen dritten Objekts verstanden werden, auf das Funkautorisierungskonzept beziehungsweise auf die Kommunikation zwischen erstem und zweitem Objekt innerhalb eines solchen Funkautorisierungssystems einzuwirken, um beispielsweise einen unerlaubten beziehungsweise unautorisierten Zugang, beispielsweise zu einem Funknetzwerk oder Automobil zu erhalten.

Einen solchen Angriff gilt es, erfindungsgemäß zu erkennen. Hierzu wird erfindungsgemäß nach Anspruch 1 ein Maß der spektralen Verteilung des an dem ersten Objekt empfangenen Eingangssignals verwendet, um festzustellen, ob das Eingangssignal ein Signal, insbesondere Freigabesignal, des Funkautorisierungssystems ist und/oder ob das Eingangssignal dem Funkautorisierungssystem fremdes Signal, insbesondere ein Signal eines dritten, nicht zu dem Funkautorisierungssystem zugehörigen Objekts, ist und/oder ob das Eingangssignal einen Angriff, insbesondere durch ein drittes, nicht zu dem Funkautorisierungssystem zugehörigen Objekt, darstellt.

Unter einem Maß einer spektralen Verteilung kann hierbei insbesondere sowohl ein Maß bezogen auf und/oder gebildet durch ein vollständiges Frequenzspektrum eines Signals oder nur bezogen auf und/oder gebildet durch Teile eines solchen Frequenzspektrums sowie die spektrale Breite eines Frequenzspektrums oder nur Teile einer solchen spektralen Breite oder ein oder mehrere, insbesondere zwei, Kennpunkt(e), wie beispielsweise Frequenzen mit maximaler oder minimaler Amplitude und/oder Intensität oder aber Start- und/oder Endpunkte eines Frequenzspektrums, oder deren Abstand verstanden werden.

In der Regel wird für die erfindungsgemäße Verwendung vorteilhafter die vollständige oder teilweise spektrale Breite verwendet. Beispielsweise ist die spektrale Breite beim Einsatz des Bluetooth-Standards für den Fall, dass es sich bei dem Eingangssignal um ein Freigabesignal handelt, insbesondere die Frequenzbreite eines einzelnen Kanals, während sich das Eingangssignal im Falle eines Angriffs über mehr als einen Kanal erstreckt. Folglich kann mittels der spektralen Breiten deutlich zwischen einem Freigabe- und einem Angriffssignals unterschieden werden.

Das Maß der spektralen Verteilung des Eingangssignals wird demnach verwendet, um festzustellen, ob das Eingangssignal von einem zweiten Objekt, folglich einem Teil des Funkautorisierungssystems, stammt und somit die Freigabe insbesondere durch einem autorisierten Nutzer erfolgt oder von einem dritten Objekt stammt und somit ein nicht-autorisierter Nutzer/ein nicht-autorisiertes Objekt versucht, sich Zugang, zu verschaffen. Es gilt, einen solchen Angrifft durch einen nicht-autorisiertes Objekt und/oder einen nicht-autorisierten Benutzer zu erkennen, um so die Freigabe eines Zugangs zu verhindern.

Hierzu wird das Maß der spektralen Verteilung mit mindestens einer, insbesondere einer, vorbestimmten Spanne verglichen. Bei der mindestens einen vorbestimmten Spanne handelt es sich insbesondere um einen Bereich von Werten, die das Maß der spektralen Verteilung annehmen kann. Die Spanne kann somit beispielsweise eine Frequenzspanne sein. Sie kann auch durch einen Maximalwert bestimmt sein und sich somit von 0 bis zu diesem Maximalwert erstrecken. Die vorbestimmte Spanne bildet demnach insbesondere ein Kriterium, um anhand des Maßes als Kenngröße zwischen einem Freigabesignal und/oder einem dem Funkautorisierungssystem fremden Signal und/oder einem Angriff unterschieden werden kann.

Insbesondere ist und/oder wird die vorbestimmte Spanne durch das Funkautorisierungssystem ausschließlich auf im Funkautorisierungssystem vorbestimmten Daten und/oder Signalen des Funkautorisierungssystem bestimmt.

Die vorbestimmte Spanne kann sich hierbei für verschiedene Funkautorisierungssysteme unterscheiden beziehungsweise wird insbesondere auf verschiedene Funkautorisierungssysteme angepasst, kann demnach jedem Funkautorisierungssystem inhärent sein. Sie kann aber auch situationsbedingt und/oder basierend auf historischen Daten so vorbestimmt sein, dass bestimmt ist, wie sie aus solchen ableitbar ist. Insbesondere ist sie aber fest vorbestimmt, insbesondere als absoluter oder relativer Zahlenwert oder durch Grenzen als absolute oder relative Zahlenwerte vorbestimmt. Insbesondere bedingen spektrale Verteilung des Freigabesignals und/oder Breite des Freigabesignals und vorbestimmte Spanne einander beziehungsweise stehen in Relation und/oder werden für verschiedenen Funkautorisierungssysteme aneinander angepasst beziehungsweise definieren einander. In der Regel wird die vorbestimmte Spanne an das Freigabesignal angepasst.

Bevorzugt wird es, als Maß der spektralen Verteilung die spektrale Breite selbst zu verwenden, sodass dann unter der vorbestimmten Spanne eine vorbestimmte Spanne der spektrale Breite verstanden wird. Die spektrale Breite kann dabei unterschiedlich bestimmt/gemessen werden, um beispielsweise Umgebungseinflüsse zu kompensieren und/oder eine einfache Bestimmung zu ermöglichen. So kann beispielsweise der Abstand zwischen zwei Kennpunkten des Spektrums eines Eingangssignals zur Bestimmung der spektralen Breite des Eingangssignals verwendet werden. Beispielsweise können Start- und/oder Endpunkte der spektralen Verteilung und/oder Frequenzen mit maximaler oder minimaler Intensität und/oder Amplitude als Kennpunkte zur Bestimmung der spektralen Breite bzw. deren Grenze verwendet werden.

Alternativ ist es ebenso denkbar, solche Kennpunkte als Maß der spektralen Verteilung zu verwenden. In diesem Fall beschreibt die vorbestimmte Spanne dann einen Frequenzbereich, insbesondere aufgespannt und/oder begrenzt durch entsprechende Kennpunkte, welcher so gewählt wird, dass entsprechende Kennpunkte eines Freigabesignals innerhalb der vorbestimmten Spanne beziehungsweise innerhalb des durch die vorbestimmte Spanne gegebenen Frequenzbereich liegt. Alternativ kann eine Differenzbildung zwischen Kennpunkten zur Bestimmung der vorbestimmten Spanne zu Erhalt eines Werts, insbesondere Absolutwerts, für die spektrale Breite dienen. Als Beispiel für eine vorbestimmte Spanne kann die standardgemäße maximale spektrale Breite eines Kanals und/oder dessen Kennpunkte, beispielsweise in einem Bluetooth-Standard, genannt werden.

Zeigt der entsprechende Vergleich, dass das Maß der spektralen Verteilung des empfangenen Eingangssignal außerhalb der mindestens einen vorbestimmten Spanne liegt, so wird das Eingangssignal als Angriff und/oder als ein dem Funkautorisierungssystem fremdes Signal gewertet wird.

Liegt das Maß der spektralen Verteilung des empfangenen Eingangssignals innerhalb der mindestens einen vorbestimmten Spanne und entspricht insbesondere die Codierung und/oder Verschlüsselung und/oder der entsprechenden Inhalt und/oder (Symbol-)Code des Eingangssignals jener/n eines Freigabesignals, so wird das Eingangssignals als ein Signal, insbesondere Freigabesignal, des Funkautorisierungssystems gewertet. Insbesondere wird in der Folge eine Freigabe erteilt. Insbesondere wird der Inhalt des Signals nur geprüft, wenn das Maß innerhalb der mindestens einen vorbestimmten Spanne liegt.

Das zweite Objekt ist eingerichtet, das mindestens eine Freigabesignal auszusenden, wobei dessen Maß der spektralen Verteilung des Freigabesignals innerhalb der mindestens einen vorbestimmten Spanne liegt. Somit ist das zweite Objekt und/oder das System insbesondere eingerichtet, eine Freigabe durch Senden des Freigabesignals an das erste Objekt zu bewirken.

Es wird ersichtlich, dass mittels der erfindungsgemäßen Verwendung des Maßes der spektralen Verteilung nach Anspruch 1 des Eingangssignals in einem Funkautorisierungssystem die Herkunft des Eingangssignals insofern bestimmt werden kann, dass zwischen einem zweiten Objekt, dessen Signal als Freigabesignal einen Nutzer zu einem autorisierten Zugang berechtigt, und einem dritten, insbesondere externen, dem Funkautorisierungssystem fremden Objekt, dessen Zugang verhindert werden soll, und welches beispielsweise einen "early detect/late-commit"-Angriff durchführt, unterschieden werden kann. Im Gegensatz zum Stand der Technik, welcher darauf fokussiert ist, einem Angriff möglichst zu erschweren, können entsprechende Freigabesignale hierzu durchaus einfach und somit weniger komplex gestaltet werden, da der Angriff nicht unmittelbar verhindert, sondern lediglich erkannt werden muss, um ihn dann zu vereiteln. Insbesondere "early-detect-late-commit"-Angriffe können aufgrund der erhöhten spektralen Breite der (Angriffs-)Signale auf diese Weise äußerst effizient erkannt werden. Ferner können die technischen Anforderungen an die Ausgestaltung entsprechender Funkautorisierungssysteme beziehungsweise derer Komponenten reduziert werden, wodurch folglich eine ressourcenschonendere Bauweise solcher Funkautorisierungssysteme ermöglicht wird.

Gleichermaßen wird die erfindungsgemäße Aufgabe durch ein Verfahren nach Anspruch 2 in einem Funkautorisierungssystem, insbesondere wie vorstehend beschrieben, gelöst. Erläuterungen zur Funktionsweise, Vorteilen und vorteilhaften Ausführungen der erfindungsgemäßen Verwendung nach Anspruch 1 haben insbesondere ebenfalls für das erfindungsgemäße Verfahren nach Anspruch 2 Geltung.

Zur Durchführung des erfindungsgemäßen Verfahrens weist das Funkautorisierungssystem mindestens ein erstes und ein zweites Objekt auf und ist eingerichtet, durch mindestens ein Freigabesignal des zweiten an das erste Objekt eine Freigabe herbeizuführen. Hierbei wird mittels des Funkautorisierungssystems eine Vielzahl von Symbolen und/oder Chips mit einer ersten Symbol- oder Chiprate in mindestens einem ersten analogen Datensignal codiert von dem ersten zu dem zweiten Objekt und/oder vom von dem zweiten zu dem ersten Objekt übertragen. Das erfindungsgemäße Verfahren dient zur Feststellung, ob ein Eingangssignal ein Signal, insbesondere Freigabesignal, des Funkautorisierungssystems und/oder ob das Eingangssignal ein dem Funkautorisierungssystem fremdes Signal, insbesondere ein Signal eines dritten, nicht zu dem Funkautorisierungssystem zugehörigen Objekts, ist und/oder ob das Eingangssignal einen Angriff, insbesondere durch ein drittes, nicht zu dem Funkautorisierungssystem zugehörigen Objekt, darstellt. Hierzu wird ein Maß der spektralen Verteilung des an dem ersten Objekt empfangenen Eingangssignals mit mindestens einer vorbestimmten Spanne verglichen und anhängig davon insbesondere eine Freigabe gewährt und/oder verweigert. Das empfangene Eingangssignal wird insbesondere als Angriff und/oder als ein dem Funkautorisierungssystem fremdes Signal gewertet, falls das Maß der spektralen Verteilung außerhalb der vorbestimmte Spanne liegt, und/oder als ein Signal des Funkautorisierungssystem gewertet, falls das Maß der spektralen Verteilung innerhalb der vorbestimmte Spanne liegt. Ferner ist das zweite Objekt eingerichtet, das mindestens eine Freigabesignal auszusenden, wobei dessen Maß der spektralen Verteilung innerhalb der vorbestimmten Spanne liegt. Analog zu der erfindungsgemäßen Verwendung kann durch das erfindungsgemäße Verfahren die Herkunft des Eingangssignals insofern bestimmt werden kann, dass zwischen einem zweiten Objekt, dessen Signal als Freigabesignal einen Nutzer zu einem autorisierten Zugang berechtigt, und einem dritten, insbesondere externen, dem Funkautorisierungssystem fremden Objekt, dessen Zugang verhindert werden soll, unterschieden werden.

Insbesondere ist und/oder wird im Rahmen eines erfindungsgemäßen Verfahrens, analog zu einer erfindungsgemäßen Verwendung, das mindestens eine Freigabesignal ausschließlich auf Basis von im Funkautorisierungssystem vorbestimmten Daten und/oder auf Basis von Signalen des Funkautorisierungssystem durch das Funkautorisierungssystem bestimmt. Das mindestens eine Freigabesignal ist ferner Teil des mindesten einen ersten analogen Datensignals und in dem Freigabesignal ist Information, insbesondere digital, in einer Mehrzahl von Symbolen und/oder Chips codiert.

Nachfolgend beschriebene vorteilhafte Weiterbildungen haben sowohl für das erfindungsgemäße Verfahren als auch für die erfindungsgemäße Verwendung Gültigkeit.

Mit Vorteil kann das Maß der spektralen Verteilung des Eingangssignals und/oder Freigabesignals die Gesamtbreite des Spektrums oder nur ein Teil der spektralen Breite des Spektrums, insbesondere ein Seitenband, sein. Die Breite des Maßes und/oder der Gesamtbreite des Spektrums und/oder eines Teils der spektralen Breite des Spektrums kann eine Flanke oder die Breite einer Flanke des Eingangssignals und/oder Freigabesignals sein oder durch Kennpunkte der spektralen Verteilung des Eingangssignals und/oder Freigabesignals gegeben sein.

Ferner umfasst die vorbestimmte Spanne vorteilhafterweise das Maß der spektralen Verteilung des Freigabesignals und/oder übersteigt die vorbestimmte Spanne insbesondere das Maß der spektralen Verteilung des Freigabesignals, insbesondere die spektrale Breite des Freigabesignals um 1% bis 50%, insbesondere 10% bis 50%, insbesondere 10% bis 30%.

Mit Vorteil wird das Maß dadurch bestimmt, dass es eine spektrale Breite ist, deren mindestens eine Grenze durch die Frequenz bestimmt wird, an der ausgehend von der Frequenz mit maximaler Amplitude eines Signals oder ausgehend von der Trägerfrequenz des Signal die Amplitude des Spektrums einen vorbestimmten Abfall zeigt und/oder gezeigt hat und/oder einen vorbestimmten Wert in Relation zur maximalen Amplitude annimmt, insbesondere die Amplitude des Signals auf 50%, insbesondere 35%, insbesondere 30%, insbesondere 20%, insbesondere 10%, insbesondere 5%, insbesondere 2%, insbesondere 1% oder weniger der maximalen Amplitude abgefallen ist, wobei der vorbestimmte Wert insbesondere an das Funkautorisierungssystem, insbesondere hinsichtlich Qualität der eingesetzten Komponenten wie beispielsweise Sender und/oder Empfänger, angepasst werden kann und/oder von diesem/n abhängig ist. Insbesondere werden beide Grenzen der Breite durch eine solche Grenze bestimmt. So ermittelte Grenzen können darüber hinaus Kennpunkte der spektralen Verteilung sein. Dabei handelt es sich insbesondere eine in Bezug auf die Frequenz untere und eine in Bezug auf die Frequenz obere Grenze und/oder Kennpunkte bezüglich einer niedrigsten und einer höchsten Frequenz. Das Maß ist insbesondere durch den Abstand der Grenzen beziehungsweise Kennpunkte gegeben. Dies ermöglicht den Ausschluss von Fehlern durch Rausch-Effekte und ermöglicht so eine effiziente und zuverlässige Bestimmung des Maßes der spektralen Verteilung.

Grundsätzlich eigenen sich aber auch andere Metriken als Maß, beispielsweise solche, die die Amplitude und/oder Intensität des Eingangssignals oder derer Verteilung über das Frequenzspektrum des Eingangssignals oder dessen zeitliche Entwicklung berücksichtigen.

Auch kann als Maß beispielsweise die in einem oder mehreren Frequenzbereichen) vorhandene/eingestrahlte Energie verwendet werden. Hierunter wird insbesondere die Summe der (Photonen-)Energien aller elektromagnetischen Wellen, insbesondere aller Funk- beziehungsweise Radiowellen, eines Signals in dem/den Frequenzbereich(en) verstanden. Als vorbestimmte Spanne kommen in diesem Fall insbesondere sowohl Absolutwerte für die Energie, als auch Relativwerte, insbesondere in Bezug auf die Relation der Energie in mehreren Frequenzbereichen, in Frage, insbesondere vorbestimmte Bereiche für die Absolut- und/oder Relativwerte.

Zur Bestimmung des Maßes und/oder zur Feststellung, ob sich das Maß innerhalb der vorbestimmten Spanne befindet eignen sich insbesondere verschiedene vorteilhafte Alternativen:
Mit Vorteil wird das Frequenzspektrum des Eingangssignals über mindestens einen ersten Frequenzbereich spektral aufgelöst und/oder dessen Energie innerhalb des mindestens einen ersten Frequenzbereichs bestimmt. Hierbei wird der mindestens eine erste Frequenzbereich derart gewählt, dass Frequenzen des mindestens einen ersten Frequenzbereichs zumindest teilweise außerhalb der vorbestimmten Spannen liegen. Insbesondere weist der mindestens eine erste Frequenzbereich keine Überschneidung mit den vorbestimmten Spannen, insbesondere einen Abstand von min. 5% der Signalbandbreite zu den vorbestimmten Spannen auf. Ferner wird das Frequenzspektrum des Eingangssignals vorteilhafterweise über mindestens einen zweiten Frequenzbereich empfangen und/oder decodiert. Der mindestens eine zweite Frequenzbereich wird hierbei derart gewählt, dass der mindestens eine zweite Frequenzbereich zumindest teilweise, insbesondere vollständig in der mindestens einen vorbestimmten Spanne liegt oder diese darstellt. Insbesondere wird der zweite Bereich verwendet, um den Inhalt des Eingangssignals zu empfangen und/oder zu decodieren. Eine passende Wahl der Frequenzbereiche ermöglicht es, gezielt ausschließlich jene Bereiche der spektralen Verteilung, welche für die Feststellung, ob das Eingangssignal ein Signal, insbesondere Freigabesignal, des Funkautorisierungssystems ist und/oder ob das Eingangssignal dem Funkautorisierungssystem fremdes Signal ist und/oder ob das Eingangssignal einen Angriff darstellt benötigt werden, zu betrachten und zu analysieren und den Inhalt des Signals zu empfangen und/oder zu decodieren. In der Folge kann so beispielsweise auf breitbandige Empfänger verzichtet werden.

Insbesondere wird das Eingangssignal als Angriff oder als ein dem Funkautorisierungssystem fremdes Signal gewertet und/oder eine Freigabe verweigert, falls in dem mindestens einen ersten Frequenzbereich eine Abweichung des gegenüber der vorbestimmen Spanne festgestellt wird und/oder das Eingangssignals im zweiten Frequenzbereich nicht einem Freigabesignal entspricht.

So kann beispielsweise über das vorbestimmte Maß eine maximale Leistung im ersten Frequenzbereich definiert sein und lediglich geprüft werden, ob diese überschritten wird oder nicht und daran erkannt werden, ob ein Freigabesignal vorliegen kann (keine Überschreitung) oder nicht vorliegen kann (Überschreitung). Sofern keine Überschreitung vorliegt, kann das Eingangssignal als Freigabesignal und/oder dem Funkautorisierungssystem bekannten Signal gewertet werden, falls das Eingangssignals im zweiten Frequenzbereich oder dessen Inhalt/Nachricht einem Freigabesignal entspricht, es also beispielswiese einen Inhalt (z.B. Code) aufweist, der mit einem vorgegebenen Inhalt übereinstimmt.

Der erste und/oder der zweite Frequenzbereich weist insbesondere eine Breite im Bereich der Signalbandbreite auf. Darunter ist nicht die absolute Lage im Spektrum sondern die Breite des ersten/zweiten Frequenzbereichs zu verstehen, wobei die Bereiche beispielsweise im GHz-Bereich liegen.

In einer weiteren vorteilhaften Weiterbildung der erfindungsgemäßen Verwendung oder des erfindungsgemäßen Verfahrens wird das Spektrum des empfangenen Signals, insbesondere in pseudozufälliger oder zufälliger, Reihenfolge
a) über den mindestens einen ersten Frequenzbereich aufgelöst und/oder dessen Energie innerhalb des mindestens einen Frequenzbereichs bestimmt und
b) über mindestens einen zweiten Frequenzbereich empfangen und/oder decodiert.

Dazu wird insbesondere das Signal mehrfach (in nicht vorhersagbarer Weise) wiederholt abgestrahlt.

Ein solches Vorgehen ermöglicht die Umsetzung der Erfindung mit noch einfacheren Mittel, indem nicht zeitgleich mehrere Frequenzbereiche betrachtet/analysiert/empfangen werden müssen.

Insbesondere wird der Schritt a) dabei mehrfach wiederholt.

Das (pseudo)zufällige Vorgehen erschwert hierbei eine Anpassung eines (Angriffs-)Signals an das erfindungsgemäße Verfahren und/oder die erfindungsgemäße Verwendung, da durch die (pseudo)zufällige Reihenfolge bzgl. der Betrachtung der einzelnen Frequenzbereiche eine gezielte Anpassung des (Angriffs-)Signals an den zum Zeitpunkt der Betrachtung relevanten Frequenzbereich effizient verhindert wird. So ist es beispielsweise für einen Dritten nicht möglich, einzelne an den ersten und den mindestens einen zweiten Frequenzbereich angepasste Signale zum korrekten Zeitpunkt zu senden, beziehungsweise vorauszusagen, welches der angepassten Signale gesendet werden muss.

Vorteilhafterweise ist das erste Objekt eingerichtet, insbesondere nur eingerichtet, Signale in unterschiedlichen Frequenzbereichen oder Kanälen, insbesondere innerhalb eines Frequenzgangs von 1 bis 8 MHz und/oder in einem Bereich von 0,4 bis 6 GHz, aufzulösen. Insbesondere werden mit besonderem Vorteil zum Decodieren von Signalen und/oder zum Vergleich des Eingangssignals mit der vorbestimmten Spanne in zeitlicher Abfolge unterschiedliche Frequenzspannen oder Kanäle zur Analyse gewählt.

In einer weiteren vorteilhaften Ausbildung wird das Freigabesignal mehrfach wiederholt durch das zweite Objekt abgestrahlt, und/oder wird das Eingangssignal wird über eine Mehrzahl von Wiederholungen empfangen und das Maß der spektralen Verteilung des Eingangssignals mit der vorbestimmten Spanne bei mindestens einer, insbesondere einer Mehrzahl, insbesondere einer Vielzahl, der Wiederholungen mit der vorbestimmten Spanne verglichen.

Ferner wird die erfindungsgemäße Aufgabe ebenfalls durch ein Funkautorisierungssystem nach Anspruch 12 gelöst. Vorteilhafte Weiterbildungen des erfindungsgemäßen Funkautorisierungssystems finden sich in den Ansprüchen 13 bis 15. Ferner lassen sich erfindungsgemäße Vorteile und Weiterbildungen der erfindungsgemäßen Verwendung und des erfindungsgemäßen Verfahrens gleichermaßen auf das erfindungsgemäße Funkautorisierungssystem übertragen und umgekehrt.

Das erfindungsgemäße Funkautorisierungssystem zum Erfassen und Analysieren eines empfangenen Eingangssignals in einer Funkkommunikation ist zur Bestimmung eines Maßes einer spektralen Verteilung des Eingangssignals und zum Vergleich des bestimmten Maßes der spektralen Verteilung des Eingangssignals mit einer vorbestimmten Spanne, sowie zur Erkennung eines Angriffs oder zur Erkennung des Eingangssignals als ein dem Funkautorisierungssystem fremdes Signal und/oder zur Verweigerung einer Freigabe basierend auf dem Vergleich des bestimmten Maßes der spektralen Verteilung des Eingangssignals mit der vorbestimmten Spanne eingerichtet. Das Eingangssignal wird insbesondere als Angriff und/oder ein dem Funkautorisierungssystem fremdes Signal gewertet, und/oder es wird eine Freigabe verweigert falls das bestimmte Maß der spektralen Verteilung des Eingangssignals außerhalb der vorbestimmten Spanne liegt. Ferner ist das Empfangsmodul insbesondere eingerichtet, das Eingangssignal als Freigabesignal und/oder ein dem Funkautorisierungssystem bekanntes Signal zu werten und/oder eine Freigabe zu gewähren, falls das bestimmte Maß der spektralen Verteilung des Eingangssignals innerhalb der vorbestimmten Spanne liegt. Gelöst wird die Aufgabe somit insbesondere durch ein Funkautorisierungssystem mit einem ersten Transceiver in und/oder an einem ersten Objekt und einem zweiten Transceiver in und/oder an einem zweiten Objekt, wobei das Funkautorisierungssystem eingerichtet ist vom ersten zum zweiten Transceiver eine Vielzahl von Symbolen und/oder Chips mit einer ersten Symbol- oder Chiprate in mindestens einem ersten analogen Datensignal codiert zu übertragen und/oder vom zweiten zum ersten Transceiver eine Vielzahl von Symbolen und/oder Chips mit einer zweiten oder der ersten Symbol- oder Chiprate in mindestens einem zweiten analogen Datensignal codiert zu übertragen. Dabei ist das das Funkautorisierungssystem eingerichtet zum Erfassen und Analysieren eines in einer Funkkommunikation zwischen dem ersten und zweiten Transceiver am ersten Transceiver empfangenen Eingangssignals, insbesondere zweiten analogen Datensignal, und eingerichtet zur Bestimmung eines Maßes einer spektralen Verteilung des Eingangssignals und eingerichtet zum Vergleich des bestimmten Maßes der spektralen Verteilung des Eingangssignals mit mindestens einer vorbestimmten Spanne, wobei das Funkautorisierungssystem eingerichtet ist,
a. das Eingangssignal als Angriff und/oder ein dem Funkautorisierungssystem fremdes Signal gewertet und/oder eine Freigabe verweigert wird, falls das bestimmte Maß der spektralen Verteilung des Eingangssignals außerhalb der mindestens einen vorbestimmten Spanne liegt und/oder
b. das Eingangssignal als ein Signal des Funkautorisierungssystem gewertet und/oder eine Freigabe gewährt wird, falls das Maß der spektralen Verteilung innerhalb der mindestens einen vorbestimmten Spanne liegt.

Dabei ist das Funkautorisierungssystem eingerichtet ist, die vorbestimmte Spanne ausschließlich auf im Funkautorisierungssystem vorbestimmten Daten und/oder Signalen des Funkautorisierungssystem zu bestimmen. Dabei kann es sich beispielsweise um einen gespeicherten Code und/oder eine gespeichert ID handeln. Auch kann beispielsweise eine im zweiten Objekt gespeicherten Objekt gespeicherte ID und eine vom ersten Objekt empfangene Information gemeinsam genutzt werden, um eine im Freigabesignal zu codierende Information zu bestimmen und das Freigabesignal entsprechend zu erzeugen. Vorteilhafterweise ist das zweite Objekt eingerichtet, so zu verfahren.

Erfindungsgemäß ist der zweite Transceiver eingerichtet, das mindestens eine Freigabesignal so zu erzeugen und/oder auszusenden, dass das Maß der spektralen Verteilung des mindestens einen Freigabesignals innerhalb der mindestens einen vorbestimmten Spanne liegt.

Insbesondere ist der zweite Transceiver eingerichtet, das mindestens eine Freigabesignal ausschließlich auf Basis von im Funkautorisierungssystem vorbestimmten Daten und/oder auf Basis von Signalen des Funkautorisierungssystems, insbesondere des mindestens einen ersten analogen Signals, zu bestimmen. So kann das Freigabesignal nach einer auf dem zweiten Transceiver und/oder dem zweiten Objekt, insbesondere Schlüssel, gespeicherten Anweisung erzeugt werden und/oder auf einem vom Funkautorisierungssystem, insbesondere dem ersten Transceiver und/oder erstem Objekt, erzeugten und vom zweiten Transceiver und/oder zweiten Objekt, insbesondere Schlüssel, empfangenen Signal basierend erzeugt werden. Insbesondere werden zur Erzeugung des Freigabesignals keine äußeren Informationen genutzt, die nicht auf im Funkautorisierungssystem vorbestimmt gespeicherten Daten beruhen oder auf Basis solcher durch das Funkautorisierungssystem erzeugt werden. Insbesondere basiert das Freigabesignal nicht auf dem Funkautorisierungssystem fremden Signalen und/oder nicht auf Umgebungssignalen.

Des Weiteren ist der der zweite Transceiver und/oder das zweite Objekt eingerichtet ist, das mindestens eine Freigabesignal als Teil des mindesten einen zweiten analogen Datensignals zu senden und in dem Freigabesignal ist Information, insbesondere digital, in einer Mehrzahl von Symbolen und/oder Chips zu codieren.

Vorteilhafte Ausgestaltungen des Verfahrens und/oder der Verwendung lassen sich vorteilhafterweise auf das System übertragen, insbesondere durch eine entsprechende Einrichtung des Systems, insbesondere des ersten und/oder zweiten Transceivers.

Insbesondere ist das erfindungsgemäße System eingerichtet ein erfindungsgemäßes Verfahren durchzuführen.

Insbesondere handelt es sich bei dem zweiten Objekt um einen Transceiver. Das zweite Objekt und/oder der zweite Transceiver des Verfahrens, der Vorrichtung und/oder des Systems ist insbesondere als Keyfob ausgeführt. Insbesondere ist das System eingerichtet und/oder wird das erfindungsgemäße Verfahren und/oder die erfindungsgemäße Verwendung so durchgeführt, dass das Freigabesignal als Antwort auf den Empfang eines ersten Datensignals am zweiten Objekt und/oder Transceiver gesendet wird. Insbesondere ist das System eingerichtet und/oder wird das erfindungsgemäße Verfahren und/oder die erfindungsgemäße Verwendung so durchgeführt, dass ein erstes Datensignal vom ersten Objekt und/oder ersten Transceiver gesendet wird, wenn eine Annäherung einer Person an das erste Objekt und/oder den ersten Transceiver oder mit diesem fest, aber nicht notwendigerweise steif, verbundenes Bauteil, wie beispielsweise eine Tür, Türgriff, Zugangsbeschränkungsmittel und/oder Schranke festgestellt wird. Insbesondere sondere sind das erste Objekt und das zweite Objekt zwei voneinander getrennte Objekt. Insbesondere ist das System eingerichtet und/oder wird das erfindungsgemäße Verfahren und/oder die erfindungsgemäße Verwendung so durchgeführt, dass das im Freigabesignal eine ID und/oder ein Codewort symbol- und/oder chipcodiert ist. Das Codewort wird insbesondere zumindest auch auf Basis einer vom ersten Objekt in einem Funksignal, insbesondere ersten analogen Datensignal, symbol- und/oder chipcodiert erhaltenden Information bestimmt. Insbesondere ist das zweite Objekt und/oder der zweite Transceiver entsprechend eingerichtet.

Mit Vorteil wird das Freigabesignal, insbesondere zusammen mit dem mindestens einen ersten analogen Datensignal, zur Entfernungsmessung zwischen erstem und zweitem Objekt und/oder erstem und zweitem Transceiver und/oder deren Antennen verwendet. Insbesondere ist das System entsprechend eingerichtet Gleichermaßen wird die erfindungsgemäße Aufgabe durch ein Funkautorisierungssystem mit einer Zugangsbeschränkungsvorrichtung nach Anspruch 13. , wobei die Zugangsbeschränkungsvorrichtung eingerichtet ist, den Zugang zu gewähren und/oder zu verweigern, insbesondere mittels eines Zugangsbeschränkungsmittels, wobei die Zugangsbeschränkungsvorrichtung eingerichtet ist, den Zugang zu verweigern, falls das Eingangssignal als Angriff oder ein dem Funkautorisierungssystem fremdes Signal gewertet wird und/oder falls das bestimmte Maß der spektralen Verteilung des Eingangssignals außerhalb der vorbestimmten Spanne liegt und/oder den Zugang zu gewähren, falls das Eingangssignal als Freigabesignal und/oder ein dem Funkautorisierungssystem bekanntes Signal gewertet wird und/oder falls das bestimmte Maß der spektralen Verteilung des Eingangssignals innerhalb der vorbestimmten Spanne liegt.

Ferner kann das erfindungsgemäße Funkautorisierungssystem zur Durchführung eines erfindungsgemäßen Verfahrens oder für die erfindungsgemäße Verwendung eingerichtet sein. Dazu weist es/sie insbesondere eine Steuerungseinheit auf, eingerichtet das erfindungsgemäße Funkautorisierungssystem entsprechend anzusteuern.

Darüber hinaus kann das erfindungsgemäße Verfahren und/oder die erfindungsgemäße Verwendung insbesondere mittels eines erfindungsgemäßen Funkautorisierungssystems ausgeführt werden.

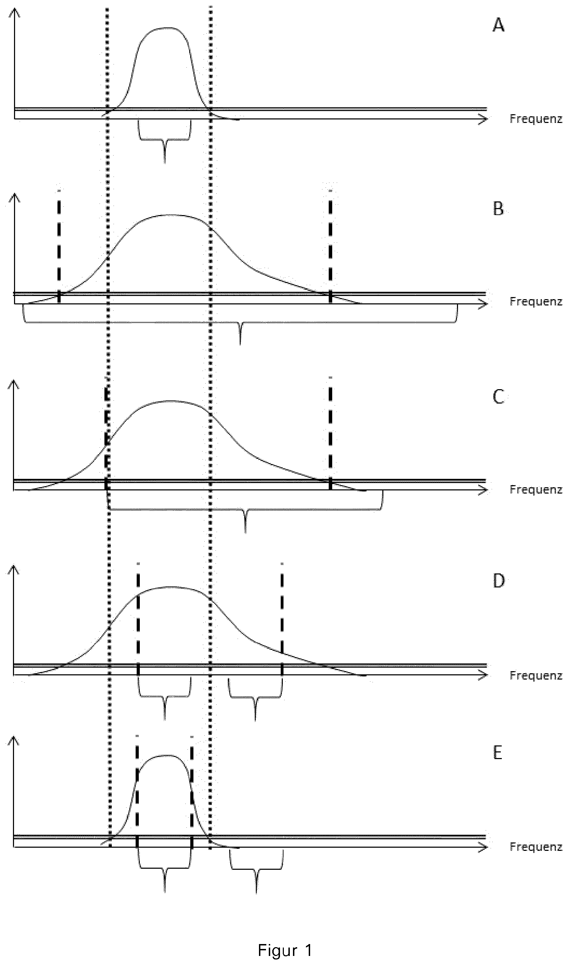

Die nachfolgende, rein exemplarische Beschreibung der rein exemplarischen und schematischen Figur 1 trägt zum besseren Verständnis der Erfindung bei. Hierbei zeigt:
- Figur 1A: die Analyse eines Freigabesignals mit einem schmalbandigen Empfänger und nur einem einzelnen Frequenzbereich,
- Figur 1B: die Analyse eines Angriffssignals mit einem breitbandigen Empfänger und nur einem einzelnen aber breiten Frequenzbereich,
- Figur 1C: die Analyse eines Angriffssignals mit einem Empfänger, dessen Bandbreite geringer als die des Empfängers in Figur 1B, jedoch größer als die des Empfängers in Figur 1A ist und nur einem einzelnen Frequenzbereich,
- Figur 1D: die Analyse eines Angriffssignals mittels eines schmalbandigen Empfängers unter Betrachtung eines ersten und eines zweiten Frequenzbereichs und
- Figur 1E: die Analyse eines Freigabesignals mittels eines schmalbandigen Empfängers unter Betrachtung eines ersten und eines zweiten Frequenzbereichs.

Figur 1 veranschaulicht sowohl den Unterschied zwischen Eingangssignalen, welche einem Freigabe- oder einem Angriffssignal entsprechen, als auch verschiedene Ausführungsformen der erfindungsgemäßen Verwendung und/oder des erfindungsgemäßen Verfahrens. Während in den Figuren 1A und 1E jeweils ein Freigabesignal dargestellt ist, zeigen die Figuren 1B-D jeweils ein Angriffssignal.

In den Ausführungsbeispielen der Figur 1A bis E werden Signalanteile, deren Amplitude, Intensität und/oder Energie unterhalb eines Grenzwertes liegt, welcher in den Figuren durch eine horizontale Doppel-Linie veranschaulicht ist, nicht betrachtet. Insofern kann sichergestellt werden, dass Frequenzen, deren Herkunft beispielsweise ein Signal-Rauschen in der Empfangseinheit ist, nicht mitbetrachtet werden. Der Grenzwert kann hierbei je nach Qualität und Signalstabilität der verwendeten Komponenten und/oder der Umgebung eines Funkautorisierungssystems angepasst werden.

Die vertikalen gepunkteten Linien in den Figuren 1A bis E repräsentieren eine erfindungsgemäße vorbestimmte Spanne, mit welcher ein erfindungsgemäßes Maß der spektralen Verteilung eines Eingangssignals verglichen wird.

Figur 1A zeigt ein Freigabesignal als Eingangssignal. Es ist sofort erkennbar, dass das gesamte Frequenzspektrum, mit Ausnahme von Frequenzen unterhalb des Grenzwertes innerhalb der vorbestimmten Spanne liegt. In Figur 1A wird die die spektrale Verteilung des Eingangssignals nur über einen einzelnen, schmalbandigen Frequenzbereich betrachtet, welcher durch eine geschweifte Klammer unterhalb des Spektrums gekennzeichnet ist. Bei diesem Frequenzbereich handelt es sich um einen erfindungsgemäßen zweiten Frequenzbereich. Dieser zweite Frequenzbereich kann genutzt werden, um den Inhalt des Signals zu empfangen und zu decodieren. Da lediglich ein einzelner, schmalbandiger Frequenzbereich untersucht wird und dieser um die Trägerfrequenz symmetrisch angeordnet ist, eignet sich die in Figur 1A dargestellte Vorgehensweise nicht zur erfindungsgemäßen Unterscheidung zwischen einem Freigabe- und einem Angriffssignal und enthält nicht alle Merkmale der Erfindung.

Figur 1B zeigt ein Ausführungsbeispiel, in welchem die spektrale Verteilung des Eingangssignals über einen großen Frequenzbereich aufgelöst wird, so beispielsweise durch einen breitbandigen Empfänger, welcher die vorbestimmte Spanne auf beiden Seiten und/oder an beiden Flanken der spektralen Verteilung des Eingangssignals übersteigt (siehe geschweifte Klammer). Diese Ausführungsform ist zur erfindungsgemäßen Unterscheidung zwischen einem Freigabe- und einem Angriffssignal geeignet. Es wird ersichtlich, dass in der vorbestimmten Spanne, in welcher ein Freigabesignal zu erwarten wäre, ein Frequenzspektrum beobachtet werden kann, welches von jenem eines Freigabesignals nur geringfügig abweicht. In der Folge könnte dieses Signal fälschlicherweise als Freigabesignal interpretiert werden, wenn lediglich ein schmalbandiger Frequenzbereich innerhalb der vorbestimmten Spanne zwischen den gepunkteten Linien in Analogie zu Figur 1A betrachtet werden würde. Jedoch werden durch die breitbandige Auflösung des Frequenzspektrums des Eingangssignals eindeutig auch Signalfrequenzen außerhalb der vorbestimmten Spanne festgestellt. Das ermittelte Maß der spektralen Verteilung (dessen maximale Ausdehnung bei Betrachtung der spektralen Breite als spektrale Verteilung durch vertikale gestrichelte Linien gekennzeichnet ist) übersteigt die vorbestimmte Spanne deutlich. Im Bereich außerhalb der vorbestimmten Spanne entspricht das Eingangssignal folglich nicht einem dem Funkautorisierungssystem bekannten Signal und/oder Freigabesignal (vgl. Fig. 1A), da dem Funkautorisierungssystem bekannte Signale und/oder Freigabesignale ausschließlich innerhalb der vorbestimmten Spanne liegen. Das Eingangssignal wird in der Folge als Angriffssignal gewertet und ein Zugang verwehrt.

Figur 1C zeigt eine weitere vorteilhafte Ausführungsform der erfindungsgemäßen Verwendung und/oder des erfindungsgemäßen Verfahrens. Verglichen mit Figur 1B wird das Frequenzspektrum lediglich über einen Frequenzbereich, welcher die vorbestimmte Spanne beinhaltet und sich in Richtung nur einer Flanke des Spektrums darüber hinaus erstreckt, betrachtet. Daraus resultierend nehmen die Anforderungen bezüglich des eingesetzten Empfängers ab, sodass ein Empfänger mit geringerer Bandbreite verwendet werden kann. Analog zu Figur 1B wird ersichtlich, dass zwar das Eingangssignal innerhalb der vorbestimmten Spanne einem Freigabesignal ähnelt, jedoch im Bereich außerhalb der vorbestimmten Spanne eine signifikante spektrale Verteilung zeigt. Das ermittelte Maß der spektralen Verteilung (dessen maximale Ausdehnung bei Betrachtung der spektralen Breite als spektrale Verteilung durch vertikale gestrichelte Linien gekennzeichnet ist) übersteigt die vorbestimmte Spanne deutlich. Verglichen mit Figur 1B ist festzuhalten, dass in Figur 1C aufgrund des schmalbandigeren, betrachteten Frequenzbereichs nur ein Teil der spektralen Verteilung des Eingangssignals betrachtet wird. Folglich entspricht das ermittelte Maß beispielsweise nur einem Teil der spektralen Breite des Eingangssignals und nicht der vollständigen spektralen Breite wie in Figur 1B. Dennoch übersteigt das ermittelte Maß die vorbestimmte Spanne deutlich. Insofern wird das Signal in der Folge als Angriff gewertet und ein Zugang verwehrt.

Die Figuren 1D und 1E zeigen eine besonders vorteilhafte Ausführungsform der erfindungsgemäßen Verwendung und/oder des erfindungsgemäßen Verfahrens. Die spektrale Verteilung des Eingangssignals wird nunmehr nicht nur über einen, sondern zwei voneinander getrennte Frequenzbereiche betrachtet. Hierbei sind beide Frequenzbereiche schmal, sodass schmalbandige und somit kostengünstige Empfänger verwendet werden können. Auch ist es möglich diese Bereiche nacheinander mit nur einem Empfänger zu betrachten. Der in den Figuren linke Frequenzbereich entspricht einem erfindungsgemäßen zweiten Frequenzbereich, während der rechte Frequenzbereich einen erfindungsgemäßen ersten Frequenzbereich darstellt. Der zweite Frequenzbereich liegt in Figur 1D und 1E vollständig innerhalb der vorbestimmten Spanne. Im zweiten Frequenzbereich werden insbesondere vorrangig Codierung, Inhalt und/oder Verschlüsselung zur Feststellung überprüft, ob es sich bei dem Eingangssignal um ein Freigabesignal handeln kann. Der erste Frequenzbereich hingegen dient vor allem zur Bestimmung des Maßes der spektralen Verteilung. Insofern wird in diesem insbesondere die Breite der Spektralen Verteilung analysiert. Wird in diesem Bereich ein signifikantes Frequenzspektrum und/oder Frequenzen mit signifikanter Amplitude, Intensität und/oder Energie beobachtet, so wird das das Eingangssignal als Angriff gewertet und ein Zugang und/oder eine Freigabe wird/werden trotz möglicherweise korrektem Inhalt, korrekter Codierung und/oder Verschlüsselung verwehrt.

Vergleicht man die Figuren 1D und 1E miteinander, so werden deutliche Unterschiede zwischen einem Angriffssignal (Figur 1D) und einem Freigabesignal (Figur 1E) ersichtlich.

Im Falle des Freigabesignals in Figur 1E weist die spektrale Verteilung des Eingangssignals im ersten Frequenzbereich keine beziehungsweise keine signifikante Amplitude, Intensität und/oder Energie auf. Das dort bestimmte Maß der spektralen Verteilung ist 0, im Gegensatz zu Fig 1D, bei der das Maß der spektralen Verteilung dort größer 0 ist. Alternativ kann man das Maß der spektralen Verteilung auch mittels ersten und zweiten Frequenzbereichs bestimmen. Das Maß der spektralen Verteilung kann dann in der Folge in Fig 1E insofern bestimmt werden, dass dieses dem zweiten Frequenzbereich, in welchem signifikante Amplituden, Intensitäten und/oder Energien gefunden werden, entspricht (über die gesamte analysierte Spanne des zweiten Frequenzbereichs liegt ein Signal vor). Folglich liegt das Maß innerhalb der vorbestimmten Spanne. Fällt zudem eine Überprüfung der Verschlüsselung und/oder Codierung im zweiten Frequenzbereich positiv aus, so wird das Eingangssignal als Freigabesignal erkannt und eine Freigabe und/oder ein Zugang wird gewährt. Verglichen hiermit zeigt die spektrale Verteilung in Figur 1D, welche jene eines Angriffssignals darstellt, im ersten Frequenzbereich Signale mit signifikanter Amplitude, Intensität und/oder Energie. Das hier bestimmte Maß der Verteilung wird größer 0 sein. Alternativ kann das Maß auch durch die untere Grenze, insbesondere niedrigste Frequenz (in der Erfassung begrenzt durch die niedrigste Frequenz der Frequenzbereiche) und die obere Grenze, insbesondere größte Frequenz (in der Erfassung begrenzt durch die höchste Frequenz der Frequenzbereiche) bestimmt werden. Im gezeigten Beispiel würde dann das ermittelte Maß demnach durch die niedrigste Frequenz des zweiten und die höchste Frequenz des ersten Frequenzbereichs begrenzt werden, dies ist durch gestrichelte Linien dargestellt. Es ist zu erkennen, dass das auch bei dieser Betrachtung ermittelte Maß außerhalb der vorbestimmten Spanne liegt, wodurch das Eingangssignal, insbesondere trotz möglicherweise korrektem Inhalt, korrekter Codierung und/oder Verschlüsselung, als Angriffssignal identifiziert wird und eine Freigabe und/oder ein Zugang nicht erteilt wird.

Ferner können auch mehrere erste Frequenzbereiche betrachtet werden, wobei diese vorteilhafterweise insbesondere bezogen auf die vorbestimmten Spanne so gewählt werden, dass die Frequenzen mindestens eines erste Frequenzbereichs niedriger und die Frequenzen mindestens eines weiteren ersten Frequenzbereichs größere Frequenzen als jene innerhalb der vorbestimmten Spanne beinhalten, zudem insbesondere sich nicht mit den Frequenzen innerhalb der vorbestimmten Spanne überschneiden. Der/die erste(n) Frequenzbereich/e können flexible gewählt und/oder zwischen Authentifizierungsvorgängen oder innerhalb einer Schleife eines Authentifizierungsvorgang variiert beziehungsweise verändert werden. Darüber hinaus müssen erste und zweite Frequenzbereiche nicht zeitgleich betrachtet werden.

## Patentansprüche

1. Verwendung in einem Funkautorisierungssystem aufweisend mindestens ein erstes und ein zweites Objekt,
wobei mittels des Funkautorisierungssystems eine Vielzahl von Symbolen und/oder Chips mit einer ersten Symbol- oder Chiprate in mindestens einem ersten analogen Datensignal codiert von dem ersten zu dem zweiten Objekt und/oder von dem zweiten zu dem ersten Objekt übertragen wird,
wobei das Funkautorisierungssystem eingerichtet ist, durch mindestens ein Freigabesignal des zweiten Objekts an das erste Objekt, eine Freigabe herbeizuführen,
wobei ein Maß der spektralen Verteilung eines an dem ersten Objekt empfangenen Eingangssignals mit mindestens einer vorbestimmten Spanne verglichen wird,
wobei die vorbestimmte Spanne durch das Funkautorisierungssystem ausschließlich auf im Funkautorisierungssystem vorbestimmten Daten und/oder Signalen des Funkautorisierungssystem bestimmt ist und/oder wird,
und
a. das empfangene Eingangssignal als Angriff und/oder als ein dem Funkautorisierungssystem fremdes Signal gewertet und/oder eine Freigabe verwehrt wird,
falls das Maß der spektralen Verteilung außerhalb der mindestens einen vorbestimmten Spanne liegt,
und
b. als ein Signal des Funkautorisierungssystem gewertet wird und/oder eine Freigabe bewirkt wird,
falls das Maß der spektralen Verteilung innerhalb der mindestens einen vorbestimmten Spanne liegt,
wobei das zweite Objekt eingerichtet ist, das mindestens eine Freigabesignal auszusenden, wobei das Maß der spektralen Verteilung des mindestens einen Freigabesignals innerhalb der mindestens einen vorbestimmten Spanne liegt,
wobei das mindestens eine Freigabesignal ausschließlich auf Basis von im Funkautorisierungssystem vorbestimmten Daten und/oder auf Basis von Signalen des Funkautorisierungssystem durch das Funkautorisierungssystem bestimmt ist und/oder wird,
wobei das mindestens eine Freigabesignal Teil des mindesten einen ersten analogen Datensignals ist und in dem Freigabesignal Information in einer eine Mehrzahl von Symbolen und/oder Chips codiert ist.

2. Verfahren in einem Funkautorisierungssystem, aufweisend mindestens ein erstes und ein zweites Objekt,
wobei mittels des Funkautorisierungssystems eine Vielzahl von Symbolen und/oder Chips mit einer ersten Symbol- oder Chiprate in mindestens einem ersten analogen Datensignal codiert von dem ersten zu dem zweiten Objekt und/oder vom von dem zweiten zu dem ersten Objekt übertragen wird, wobei das Funkautorisierungssystem eingerichtet ist, durch mindestens ein Freigabesignal des zweiten Objekts an das erste Objekt eine Freigabe herbeizuführen,
wobei ein Maß der spektralen Verteilung des an dem ersten Objekt empfangenen Eingangssignals mit mindestens einer vorbestimmten Spanne verglichen wird,
wobei die vorbestimmte Spanne durch das Funkautorisierungssystem ausschließlich auf im Funkautorisierungssystem vorbestimmten Daten und/oder Signalen des Funkautorisierungssystem bestimmt ist und/oder wird,
und
a. das empfangene Eingangssignal als Angriff und/oder als ein dem Funkautorisierungssystem fremdes Signal gewertet und/oder eine Freigabe verweigert wird,
falls das Maß der spektralen Verteilung außerhalb der mindestens einen vorbestimmten Spanne liegt,
und
b. als ein Signal des Funkautorisierungssystem gewertet und/oder eine Freigabe gewährt wird,
falls das Maß der spektralen Verteilung innerhalb der mindestens einen vorbestimmten Spanne liegt,
wobei das zweite Objekt eingerichtet ist, das mindestens eine Freigabesignal auszusenden,
wobei das Maß der spektralen Verteilung des mindestens einen Freigabesignals innerhalb der mindestens einen vorbestimmten Spanne liegt, wobei das mindestens eine Freigabesignal ausschließlich auf Basis von im Funkautorisierungssystem vorbestimmten Daten und/oder auf Basis von Signalen des Funkautorisierungssystem durch das Funkautorisierungssystem bestimmt ist und/oder wird,
wobei das mindestens eine Freigabesignal Teil des mindesten einen ersten analogen Datensignals ist und in dem Freigabesignal Information in einer eine Mehrzahl von Symbolen und/oder Chips codiert ist.

3. Verwendung oder Verfahren nach einem der vorherstehenden Ansprüche, wobei das Maß der spektralen Verteilung des Eingangssignals und/oder Freigabesignals
• die Gesamtbreite des Spektrums oder
• nur ein Teil der spektralen Breite des Spektrums, insbesondere ein Seitenband, dessen Breite, eine Flanke oder deren Breite, des Eingangssignals und/oder Freigabesignals ist/sind oder
• durch Endpunkte der spektralen Verteilung des Eingangssignals und/oder Freigabesignals gegeben ist/sind.

4. Verwendung oder Verfahren nach einem der vorherstehenden Ansprüche, wobei die mindestens einen vorbestimmte Spanne das Maß der spektralen Verteilung des Freigabesignals umfasst und/oder
die mindestens eine vorbestimmte Spanne das Maß der spektralen Verteilung des Freigabesignals die spektrale Breite des Freigabesignals um 1% bis 50% übersteigt und/oder
wobei es sich bei der mindestens einen vorbestimmten Spanne um genau eine vorbestimmte Spanne handelt.

5. Verwendung oder Verfahren nach einem der vorherstehenden Ansprüche, wobei das Maß dadurch bestimmt ist, dass es eine spektrale Breite ist, deren mindestens eine Grenze durch die Frequenz bestimmt wird, an der ausgehend von der Frequenz mit maximaler Amplitude eines Signals oder der Trägerfrequenz die Amplitude des Spektrums des Signals auf 5% oder weniger der maximalen Amplitude abgefallen ist.

6. Verwendung oder Verfahren nach einem der vorherstehenden Ansprüche **dadurch gekennzeichnet, dass** das Frequenzspektrum des Eingangssignals über mindestens einen ersten Frequenzbereich spektral aufgelöst wird, wobei der mindestens eine erste Frequenzbereich derart gewählt wird, dass Frequenzen des mindestens einen ersten Frequenzbereichs zumindest teilweise außerhalb der mindestens einen vorbestimmten Spanne liegen, insbesondere der mindestens eine erste Frequenzbereich keine Überschneidung mit der mindestens einen vorbestimmten Spanne aufweisen, insbesondere einen Abstand von min. 5% der Signalbandbreite zu der mindestens einen vorbestimmten Spanne aufweiset.

7. Verwendung oder Verfahren nach einem der vorherstehenden Ansprüche **dadurch gekennzeichnet, dass** das Frequenzspektrum des Eingangssignals über mindestens einen zweiten Frequenzbereich spektral aufgelöst wird, wobei der mindestens eine zweite Frequenzbereich derart gewählt wird, dass der mindestens eine zweite Frequenzbereich zumindest teilweise, insbesondere vollständig in der mindestens einen vorbestimmten Spanne liegt.

8. Verwendung oder Verfahren nach Anspruch 7 **dadurch gekennzeichnet, dass** das Frequenzspektrum des Eingangssignals mindestens in dem mindestens einen ersten Frequenzbereich und über den zweiten Frequenzbereich aufgelöst wird und das Eingangssignal als Angriff oder als ein dem Funkautorisierungssystem fremdes Signal gewertet wird, falls in dem mindestens einen ersten Frequenzbereich eine Abweichung des Spektrums des Eingangssignals gegenüber der mindestens einen vorbestimmen Spanne festgestellt wird und/oder das Eingangssignals im zweiten Frequenzbereich nicht einem Freigabesignal entspricht.

9. Verwendung oder Verfahren nach einem der Ansprüche 7 oder 8 **dadurch gekennzeichnet, dass** das Spektrum des empfangenen Signals in zufälliger Reihenfolge über den mindestens einen ersten Frequenzbereich und den mindestens einen zweiten Frequenzbereich aufgelöst wird.

10. Verwendung oder Verfahren nach einem der vorherstehenden Ansprüche, wobei das erste Objekt eingerichtet ist, Signale in unterschiedlichen Frequenzbereichen oder Kanälen, insbesondere innerhalb eines Frequenzgangs von 1 bis 8 MHz und/oder in einem Bereich von 0,4 bis 6 GHz, aufzulösen, **dadurch gekennzeichnet, dass** zum Decodieren von Signalen und/oder zum Vergleich des Eingangssignals mit der mindestens einen vorbestimmten Spanne in zeitlicher Abfolge unterschiedliche Frequenzspannen oder Kanäle zur Analyse gewählt werden.

11. Verwendung oder Verfahren nach einem der vorherstehenden Ansprüche **dadurch gekennzeichnet, dass** das Freigabesignal mehrfach wiederholt abgestrahlt wird und/oder das Eingangssignal über eine Mehrzahl von Wiederholungen empfangen und das Maß der spektralen Verteilung des Eingangssignals mit der mindestens einen vorbestimmten Spanne bei mindestens einer der Wiederholungen verglichen wird.

12. Funkautorisierungssystem mit einem ersten Transceiver in und/oder an einem ersten Objekt und einem zweiten Transceiver in und/oder an einem zweiten Objekt, wobei das Funkautorisierungssystem eingerichtet ist vom ersten zum zweiten Transceiver eine Vielzahl von Symbolen und/oder Chips mit einer ersten Symbol- oder Chiprate in mindestens einem ersten analogen Datensignal codiert zu übertragen und vom zweiten zum ersten Transceiver eine Vielzahl von Symbolen und/oder Chips mit einer zweiten oder der ersten Symbol- oder Chiprate in mindestens einem zweiten analogen Datensignal codiert zu übertragen,
wobei das Funkautorisierungssystem eingerichtet ist zum Erfassen und Analysieren eines in einer Funkkommunikation zwischen dem ersten und zweiten Transceiver am ersten Transceiver empfangenen Eingangssignals, insbesondere zweiten analogen Datensignal, und eingerichtet ist zur Bestimmung eines Maßes einer spektralen Verteilung des Eingangssignals und eingerichtet ist zum Vergleich des bestimmten Maßes der spektralen Verteilung des Eingangssignals mit mindestens einer vorbestimmten Spanne, wobei das Funkautorisierungssystem eingerichtet ist,
a. das Eingangssignal als Angriff und/oder ein dem Funkautorisierungssystem fremdes Signal zu werten und/oder eine Freigabe zu verweigern,
falls das bestimmte Maß der spektralen Verteilung des Eingangssignals außerhalb der mindestens einen vorbestimmten Spanne liegt
und
b. das Eingangssignal als ein Signal des Funkautorisierungssystem zu werten und/oder eine Freigabe zu gewähren,
falls das Maß der spektralen Verteilung innerhalb der mindestens einen vorbestimmten Spanne liegt.
wobei das Funkautorisierungssystem eingerichtet ist, die vorbestimmte Spanne ausschließlich auf im Funkautorisierungssystem vorbestimmten Daten und/oder Signalen des Funkautorisierungssystem zu bestimmen, wobei der zweite Transceiver eingerichtet ist, das mindestens eine Freigabesignal so auszusenden, dass das Maß der spektralen Verteilung des mindestens einen Freigabesignals innerhalb der mindestens einen vorbestimmten Spanne liegt,
wobei der zweite Transceiver und/oder zweite Objekt eingerichtet ist, das mindestens eine Freigabesignal ausschließlich auf Basis von im Funkautorisierungssystem vorbestimmten Daten und/oder auf Basis von Signalen des Funkautorisierungssystems, insbesondere des mindestens einen ersten analogen Signals, zu bestimmen,
wobei der zweite Transceiver und/oder das zweite Objekt eingerichtet ist, das mindestens eine Freigabesignal als Teil des mindesten einen zweiten analogen Datensignals zu senden und in dem Freigabesignal Information in einer Mehrzahl von Symbolen und/oder Chips zu codieren.

13. Funkautorisierungssystem nach Anspruch 12 aufweisend eine Zugangsbeschränkungsvorrichtung, wobei die Zugangsbeschränkungsvorrichtung eingerichtet ist, den Zugang zu gewähren oder zu verweigern, insbesondere mittels eines Zugangsbeschränkungsmittels, wobei die Zugangsbeschränkungsvorrichtung eingerichtet ist, den Zugang zu verweigern, falls das bestimmte Maß der spektralen Verteilung des Eingangssignals außerhalb der mindestens einen vorbestimmten Spanne liegt und/oder den Zugang zu gewähren, falls das Maß der spektralen Verteilung innerhalb der mindestens einen vorbestimmten Spanne liegt.

14. Funkautorisierungssystem nach einem der Ansprüche 12 bis 13, wobei der zweite Transciever eingerichtet ist, das Freigabesignal so an den ersten Transciever zu senden, dass das Maß der spektralen Verteilung des Freigabesignals innerhalb der mindestens einen vorbestimmten Spanne liegt.

15. Zugangsbeschränkungssystem aufweisend ein Funkautorisierungssystem nach einem der Ansprüche 12 bis 14, wobei die Zugangsbeschränkungsvorrichtung eingerichtet ist,
a. den Zugang zu verweigern,
falls das bestimmte Maß der spektralen Verteilung des Eingangssignals außerhalb der mindestens einen vorbestimmten Spanne liegt
und
b. den Zugang zu gewähren,
falls das Maß der spektralen Verteilung innerhalb der mindestens einen vorbestimmten Spanne liegt.

## Claims

1. The use in a radio authorisation system comprising at least a first and a second object,
wherein by means of the radio authorisation system a plurality of symbols and/or chips with a first symbol or chip rate is transmitted encoded in at least a first analogue data signal from the first to the second object and/or from the second to the first object,
wherein the radio authorisation system is arranged to effect release by at least one release signal of the second object to the first object, by means of at least one release signal of the second object to the first object, a release is brought about, a measure of the spectral distribution of an input signal received at the first object being compared with at least one predetermined span,
the predetermined span being determined by the radio authorisation system exclusively on the basis of data and/or signals of the radio authorisation system which are predetermined in the radio authorisation system, and
a. the received input signal is evaluated as an attack and/or as a signal foreign to the radio authorisation system and/or a release is denied if the measure of the spectral distribution is outside said at least one predetermined range, and
b. is evaluated as a signal of the radio authorisation system and/or a release is effected if the measure of the spectral distribution is within said at least one predetermined range,
wherein the second object is arranged to emit said at least one enabling signal, wherein the measure of the spectral distribution of said at least one enabling signal lies within said at least one predetermined span,
wherein said at least one enabling signal is and/or is determined exclusively on the basis of data predetermined in the radio authorisation system and/or on the basis of signals of the radio authorisation system by the radio authorisation system, wherein said at least one enable signal is part of said at least one first analogue data signal and information is encoded in the enable signal in a plurality of symbols and/or chips.

2. A method in a radio authorisation system comprising at least a first and a second object,
wherein by means of the radio authorisation system a plurality of symbols and/or chips with a first symbol or chip rate is transmitted encoded in at least a first analogue data signal from the first to the second object and/or from the second to the first object,
wherein the radio authorisation system is arranged to effect a release by at least one release signal of the second object to the first object, by means of at least one release signal of the second object to the first object,
wherein a measure of the spectral distribution of the input signal received at the first object is compared with at least one predetermined span,
wherein the predetermined span is and/or is determined by the radio authorisation system exclusively on the basis of data and/or signals of the radio authorisation system which are predetermined in the radio authorisation system,
and
a. the received input signal is evaluated as an attack and/or as a signal foreign to the radio authorisation system and/or an authorisation is refused if the measure of the spectral distribution is outside said at least one predetermined range,
and
b. is evaluated as a signal from the radio authorisation system and/or a release is granted,
if the measure of spectral distribution is within said at least one predetermined range,
wherein the second object is arranged to emit said at least one enable signal, wherein the measure of the spectral distribution of said at least one enabling signal lies within said at least one predetermined span, wherein said at least one enabling signal is and/or is determined exclusively on the basis of data predetermined in the radio authorisation system and/or on the basis of signals of the radio authorisation system by the radio authorisation system,
wherein said at least one enable signal is part of said at least one first analogue data signal and information is encoded in the enable signal in a plurality of symbols and/or chips.

3. A use or method according to any one of the preceding claims, wherein the measure of the spectral distribution of the input signal and/or enable signal is
• the total width of the spectrum or
• is only a part of the spectral width of the spectrum, in particular a sideband, its width, an edge or its width, of the input signal and/or enable signal or
• is given by end points of the spectral distribution of the input signal and/or enable signal.

4. A use or method according to any one of the preceding claims, wherein said at least one predetermined span comprises the measure of the spectral distribution of the enable signal and/or
said at least one predetermined span the measure of the spectral distribution of the enable signal exceeds the spectral width of the enable signal by 1 % to 50% and/or
wherein said at least one predetermined span is exactly one predetermined span.

5. A use or method according to any one of the preceding claims, wherein the measure is determined by being a spectral width whose at least one limit is determined by the frequency at which, starting from the maximum amplitude frequency of a signal or the carrier frequency, the amplitude of the spectrum of the signal has dropped to 5% or less of the maximum amplitude.

6. A use or method according to one of the preceding claims, **characterised in that** the frequency spectrum of the input signal is spectrally resolved over at least one first frequency range,
said at least one first frequency range being selected in such a way that frequencies of said at least one first frequency range lie at least partially outside said at least one predetermined span,
in particular said at least one first frequency range having no overlap with said at least one predetermined span, in particular having a distance of at least 5% of the signal bandwidth from said at least one predetermined span.

7. A use or method according to one of the preceding claims, **characterised in that** the frequency spectrum of the input signal is spectrally resolved over at least one second frequency range,
said at least one second frequency range being selected in such a way that said at least one second frequency range lies at least partially, in particular completely, in said at least one predetermined span.

8. A use or method according to claim 7, **characterised in that** the frequency spectrum of the input signal is resolved at least in said at least one first frequency range and over the second frequency range and the input signal is evaluated as an attack or as a signal foreign to the radio authorisation system if a deviation of the spectrum of the input signal from said at least one predetermined span is detected in said at least one first frequency range and/or the input signal in the second frequency range does not correspond to an enabling signal.

9. A use or method according to any one of claims 7 or 8, **characterised in that** the spectrum of the received signal is resolved in random order over said at least one first frequency range and said at least one second frequency range.

10. A use or method according to one of the preceding claims, wherein the first object is arranged to resolve signals in different frequency ranges or channels, in particular within a frequency response of 1 to 8 MHz and/or in a range of 0.4 to 6 GHz, **characterised in that** different frequency ranges or channels are selected for analysis for decoding signals and/or for comparing the input signal with said at least one predetermined range in time sequence.

11. A use or method according to any one of the preceding claims, **characterised in that** the enable signal is repeatedly emitted a plurality of times and/or the input signal is received over a plurality of repetitions and the measure of the spectral distribution of the input signal is compared with said at least one predetermined span at at least one of the repetitions.

12. A radio authorisation system having a first transceiver in and/or on a first object and a second transceiver in and/or on a second object, the radio authorisation system being set up to transmit from the first to the second transceiver a multiplicity of symbols and/or chips encoded at a first symbol or chip rate in at least one first analogue data signal and to transmit from the second to the first transceiver a multiplicity of symbols and/or chips encoded at a second or the first symbol or chip rate in at least one second analogue data signal,
wherein the radio authorisation system is set up to detect and analyse an input signal, in particular a second analogue data signal, received at the first transceiver in a radio communication between the first and second transceivers, and is set up to determine a measure of a spectral distribution of the input signal and is set up to compare the determined measure of the spectral distribution of the input signal with at least one predetermined span, wherein the radio authorisation system is set up,
a. to evaluate the input signal as an attack and/or a signal alien to the radio authorisation system and/or to refuse a release,
if the determined measure of the spectral distribution of the input signal lies outside said at least one predetermined span
and
b. to evaluate the input signal as a signal of the radio authorisation system and/or to grant a release,
if the measure of spectral distribution is within said at least one predetermined range.
wherein the radio authorisation system is arranged to determine the predetermined span exclusively on data and/or signals of the radio authorisation system predetermined in the radio authorisation system, wherein the second transceiver is arranged to transmit said at least one enabling signal such that the measure of the spectral distribution of said at least one enabling signal lies within said at least one predetermined span,
wherein the second transceiver and/or second object is arranged to determine said at least one enabling signal exclusively on the basis of data predetermined in the radio authorisation system and/or on the basis of signals of the radio authorisation system, in particular said at least one first analogue signal, wherein the second transceiver and/or the second object is arranged to transmit said at least one enable signal as part of said at least one second analogue data signal and to encode information in the enable signal in a plurality of symbols and/or chips.

13. A radio authorisation system according to claim 12, comprising an access restriction device, wherein the access restriction device is arranged to grant or deny access, in particular by means of an access restriction means, wherein the access restriction device is arranged to deny access if the determined measure of the spectral distribution of the input signal lies outside said at least one predetermined range and/or to grant access if the measure of the spectral distribution lies within said at least one predetermined range.

14. A radio authorisation system of any one of claims 12 to 13, wherein the second transceiver is arranged to transmit the enable signal to the first transceiver such that the measure of spectral distribution of the enable signal is within said at least one predetermined span.

15. An access restriction system comprising a radio authorisation system according to any one of claims 12 to 14, wherein the access restriction device is arranged tp,
a. deny access if the determined measure of the spectral distribution of the input signal is outside said at least one predetermined range
and
b. grant access if the measure of spectral distribution is within said at least one predetermined range.

## Revendications

1. Utilisation dans un système d'autorisation radio comprenant au moins un premier et un second objet,
dans lequel, au moyen du système d'autorisation radio, une pluralité de symboles et/ou de puces avec un premier débit de symboles ou de puces est transmise, codée dans au moins un premier signal de données analogique, du premier au second objet et/ou du second au premier objet,
dans lequel le système d'autorisation radio est agencé pour effectuer une libération par au moins un signal de libération du second objet vers le premier objet, au moyen d'au moins un signal de libération du second objet vers le premier objet, une libération est provoquée, une mesure de la distribution spectrale d'un signal d'entrée reçu au niveau du premier objet étant comparée à au moins un intervalle prédéterminé,
la portée prédéterminée étant déterminée par le système d'autorisation radio exclusivement sur la base de données et/ou de signaux du système d'autorisation radio qui sont prédéterminés dans le système d'autorisation radio, et
a. le signal d'entrée reçu est évalué comme une attaque et/ou comme un signal étranger au système d'autorisation radio et/ou une autorisation est refusée si la mesure de la distribution spectrale est en dehors de ladite au moins une plage prédéterminée, et
b. est évaluée comme un signal du système d'autorisation radio et/ou une libération est effectuée si la mesure de la distribution spectrale se situe dans ladite au moins une plage prédéterminée,
dans lequel le second objet est agencé pour émettre ledit au moins un signal de validation, dans lequel la mesure de la distribution spectrale dudit au moins un signal de validation se trouve dans ledit au moins un intervalle prédéterminé, dans lequel ledit au moins un signal de validation est et/ou est déterminé exclusivement sur la base de données prédéterminées dans le système d'autorisation radio et/ou sur la base de signaux du système d'autorisation radio par le système d'autorisation radio,
dans lequel ledit au moins un signal de validation fait partie dudit au moins un premier signal de données analogique et les informations sont codées dans le signal de validation dans une pluralité de symboles et/ou de puces.

2. Procédé dans un système d'autorisation radio comprenant au moins un premier et un second objet,
dans lequel, au moyen du système d'autorisation radio, une pluralité de symboles et/ou de puces avec un premier débit de symboles ou de puces est transmise, codée dans au moins un premier signal de données analogique, du premier au second objet et/ou du second au premier objet,
dans lequel le système d'autorisation radio est conçu pour effectuer une libération par au moins un signal de libération du second objet vers le premier objet, au moyen d'au moins un signal de libération du second objet vers le premier objet, dans lequel une mesure de la distribution spectrale du signal d'entrée reçu au niveau du premier objet est comparée à au moins un intervalle prédéterminé, dans lequel la portée prédéterminée est et/ou est déterminée par le système d'autorisation radio exclusivement sur la base de données et/ou de signaux du système d'autorisation radio qui sont prédéterminés dans le système d'autorisation radio,
et
a. le signal d'entrée reçu est évalué comme une attaque et/ou comme un signal étranger au système d'autorisation radio et/ou une autorisation est refusée si la mesure de la distribution spectrale est en dehors de ladite au moins une plage prédéterminée,
et
b. est évalué comme un signal du système d'autorisation radio et/ou une autorisation est accordée,
si la mesure de la distribution spectrale se situe dans ladite au moins une plage prédéterminée,
dans lequel le second objet est agencé pour émettre ledit au moins un signal de validation,
dans lequel la mesure de la distribution spectrale dudit au moins un signal de validation se situe dans ledit au moins un intervalle prédéterminé, dans lequel ledit au moins un signal de validation est et/ou est déterminé exclusivement sur la base de données prédéterminées dans le système d'autorisation radio et/ou sur la base de signaux du système d'autorisation radio par le système d'autorisation radio, dans lequel ledit au moins un signal de validation fait partie dudit au moins un premier signal de données analogique et les informations sont codées dans le signal de validation dans une pluralité de symboles et/ou de puces.

3. Utilisation ou procédé selon l'une quelconque des revendications précédentes, dans laquelle la mesure de la distribution spectrale du signal d'entrée et/ou du signal de validation est
• la largeur totale du spectre ou
• est seulement une partie de la largeur du spectre, en particulier une bande latérale, sa largeur, un bord ou sa largeur, du signal d'entrée et/ou du signal de validation ou
• est donné par les points extrêmes de la distribution spectrale du signal d'entrée et/ou du signal de validation.

4. Utilisation ou procédé selon l'une quelconque des revendications précédentes, dans lequel ledit au moins un intervalle prédéterminé comprend la mesure de la distribution spectrale du signal de validation et/ou de la distribution spectrale du signal de validation.
ledit au moins un intervalle de temps prédéterminé, la mesure de la distribution spectrale du signal de validation dépasse la largeur spectrale du signal de validation de 1% à 50%.
et/ou
dans lequel ledit au moins un intervalle prédéterminé est exactement un intervalle prédéterminé.

5. Utilisation ou procédé selon l'une quelconque des revendications précédentes, dans lequel la mesure est déterminée en étant une largeur spectrale dont au moins une limite est déterminée par la fréquence à laquelle, à partir de la fréquence d'amplitude maximale d'un signal ou de la fréquence porteuse, l'amplitude du spectre du signal est tombée à 5% ou moins de l'amplitude maximale.

6. Utilisation ou procédé selon l'une des revendications précédentes, **caractérisé en ce que** le spectre de fréquences du signal d'entrée est résolu spectralement sur au moins une première plage de fréquences,
ladite au moins une première gamme de fréquences étant sélectionnée de telle sorte que les fréquences de ladite au moins une première gamme de fréquences se trouvent au moins partiellement en dehors de ladite au moins une plage prédéterminée,
en particulier ladite au moins une première gamme de fréquences n'ayant aucun chevauchement avec ladite au moins une plage prédéterminée, en particulier ayant une distance d'au moins 5 % de la largeur de bande du signal par rapport à ladite au moins une plage prédéterminée.

7. Utilisation ou procédé selon l'une des revendications précédentes, **caractérisé en ce que** le spectre de fréquences du signal d'entrée est résolu spectralement sur au moins une seconde plage de fréquences,
ladite au moins une seconde gamme de fréquences étant sélectionnée de telle sorte que ladite au moins une seconde gamme de fréquences se trouve au moins partiellement, en particulier complètement, dans ladite au moins une plage prédéterminée.

8. Utilisation ou procédé selon la revendication 7, **caractérisé en ce que** le spectre de fréquence du signal d'entrée est résolu au moins dans ladite au moins une première plage de fréquence et sur la seconde plage de fréquence et le signal d'entrée est évalué comme une attaque ou comme un signal étranger au système d'autorisation radio si un écart du spectre du signal d'entrée par rapport à ladite au moins une plage prédéterminée est détecté dans ladite au moins une première plage de fréquence et/ou le signal d'entrée dans la seconde plage de fréquence ne correspond pas à un signal de validation.

9. Utilisation ou procédé selon l'une quelconque des revendications 7 ou 8, **caractérisé en ce que** le spectre du signal reçu est résolu dans un ordre aléatoire sur ladite au moins une première plage de fréquences et ladite au moins une seconde plage de fréquences.

10. Utilisation ou procédé selon l'une des revendications précédentes, dans lequel le premier objet est agencé pour résoudre des signaux dans différentes plages de fréquences ou canaux, en particulier dans une réponse en fréquence de 1 à 8 MHz et/ou dans une plage de 0,4 à 6 GHz, **caractérisé en ce que** différentes plages de fréquences ou canaux sont sélectionnés pour une analyse pour décoder des signaux et/ou pour comparer le signal d'entrée avec ladite au moins une plage prédéterminée dans une séquence temporelle.

11. Utilisation ou procédé selon l'une quelconque des revendications précédentes, **caractérisé en ce que** le signal de validation est émis de manière répétée une pluralité de fois et/ou le signal d'entrée est reçu sur une pluralité de répétitions et la mesure de la distribution spectrale du signal d'entrée est comparée à ladite au moins une plage prédéterminée à au moins une des répétitions.

12. Système d'autorisation radio ayant un premier émetteur-récepteur dans et/ou sur un premier objet et un second émetteur-récepteur dans et/ou sur un second objet, le système d'autorisation radio étant configuré pour transmettre du premier au second émetteur-récepteur une multiplicité de symboles et/ou de jetons codés à un premier débit de symboles ou de jetons dans au moins un premier signal de données analogique et pour transmettre du second au premier émetteur-récepteur une multiplicité de symboles et/ou de jetons codés à un second ou au premier débit de symboles ou de jetons dans au moins un second signal de données analogique,
dans lequel le système d'autorisation radio est configuré pour détecter et analyser un signal d'entrée, en particulier un second signal de données analogique, reçu au niveau du premier émetteur-récepteur dans une communication radio entre les premier et second émetteurs-récepteurs, et est configuré pour déterminer une mesure d'une distribution spectrale du signal d'entrée et est configuré pour comparer la mesure déterminée de la distribution spectrale du signal d'entrée avec au moins une plage prédéterminée, dans lequel le système d'autorisation radio est configuré pour,
a. évaluer le signal d'entrée comme une attaque et/ou un signal étranger au système d'autorisation radio et/ou de refuser une autorisation,
si la mesure déterminée de la distribution spectrale du signal d'entrée se trouve en dehors de ladite au moins une plage prédéterminée
et
b. évaluer le signal d'entrée en tant que signal du système d'autorisation radio et/ou d'accorder une autorisation,
si la mesure de la distribution spectrale se situe dans ladite au moins une plage prédéterminée.
dans lequel le système d'autorisation radio est agencé pour déterminer la plage prédéterminée exclusivement sur des données et/ou des signaux du système d'autorisation radio prédéterminés dans le système d'autorisation radio, dans lequel le second émetteur-récepteur est agencé pour transmettre ledit au moins un signal de validation de sorte que la mesure de la distribution spectrale dudit au moins un signal de validation se trouve dans ladite au moins une plage prédéterminée,
dans lequel le second émetteur-récepteur et/ou le second objet est agencé pour déterminer ledit au moins un signal de validation exclusivement sur la base de données prédéterminées dans le système d'autorisation radio et/ou sur la base de signaux du système d'autorisation radio, en particulier ledit au moins un premier signal analogique,
dans lequel le second émetteur-récepteur et/ou le second objet est agencé pour transmettre ledit au moins un signal de validation en tant que partie dudit au moins un second signal de données analogique et pour coder les informations dans le signal de validation dans une pluralité de symboles et/ou de puces.

13. Système d'autorisation radio selon la revendication 12, comprenant un dispositif de restriction d'accès, dans lequel le dispositif de restriction d'accès est agencé pour accorder ou refuser l'accès, en particulier au moyen d'un moyen de restriction d'accès, dans lequel le dispositif de restriction d'accès est agencé pour refuser l'accès si la mesure déterminée de la distribution spectrale du signal d'entrée se situe en dehors de ladite au moins une plage prédéterminée et/ou pour accorder l'accès si la mesure de la distribution spectrale se situe dans ladite au moins une plage prédéterminée.

14. Système d'autorisation radio de l'une quelconque des revendications 12 à 13, dans lequel le second émetteur-récepteur est agencé pour transmettre le signal de validation au premier émetteur-récepteur de telle sorte que la mesure de la distribution spectrale du signal de validation se trouve dans ladite au moins une plage prédéterminée.

15. Système de restriction d'accès comprenant un système d'autorisation radio selon l'une quelconque des revendications 12 à 14, dans lequel le dispositif de restriction d'accès est agencé pour,
a. refuser l'accès si la mesure déterminée de la distribution spectrale du signal d'entrée est en dehors de ladite au moins une plage prédéterminée et
b. accorder l'accès si la mesure de la distribution spectrale est dans ladite au moins une gamme prédéterminée.
